# EUROPEAN PATENT SPECIFICATION

(11) **EP 3 523 376 B1**
(45) Date of publication and mention of the grant of the patent: **20.04.2022**
(21) Application number: 17859069.1
(22) Date of filing: 04.10.2017
(51) Int. Cl.: C09D 5/00, C09K 3/14, C08K 3/04, B32B 5/16

(54) **COATING COMPOSITIONS INCLUDING DIAMOND AND EITHER CATIONIC CURABLE RESIN SYSTEMS OR THIOL-ENE CURABLE SYSTEMS**
BESCHICHTUNGSZUSAMMENSETZUNGEN MIT DIAMANT UND ENTWEDER KATIONISCHEN HÄRTBAREN HARZSYSTEMEN ODER THIOLENHÄRTBAREN SYSTEMEN
COMPOSITIONS DE REVÊTEMENT COMPRENANT DU DIAMANT ET DES SYSTÈMES DE RÉSINE DURCISSABLE CATIONIQUE OU DES SYSTÈMES DURCISSABLES THIOL-ÈNE

(30) Priority: 05.10.2016 US 201662404445 P
(43) Date of publication of application: 14.08.2019
(73) Proprietor: AFI Licensing LLC, Lancaster, PA 17604 (US)
(72) Inventor: TIAN, Dong, Lancaster PA 17601 (US); ROSS, Jeffrey, S., Lancaster PA 17603 (US)
(74) Representative: Rummler, Felix
(86) International application number: PCT/US2017/055033
(87) International publication number: WO 2018/067634

(56) References cited:
- US-A1- 2003 200 701
- US-A1- 2003 200 701
- US-A1- 2006 242 910
- US-A1- 2006 242 910
- US-A1- 2010 276 059
- US-A1- 2013 216 838
- US-A1- 2015 174 786

## Description

### FIELD OF THE INVENTION

Embodiments of the present invention relate to an abrasion resistant coating for substrates, methods for preparing and applying the abrasion resistant coating, and flooring systems comprising the abrasion resistant coated substrates. Moreover, the present invention relates generally and specifically to abrasion resistant coating compositions that use either cationic cured resin systems or thiol-ene cured systems and which are curable under UV light. In particular, these systems are combined with abrasion resistant material, such as diamond, prior to curing.

### BACKGROUND

Heretofore, curable coating compositions have been used as overcoat materials to cover the surface of flooring products or various abrasion heavy surfaces to protect such products or surfaces from damage by abrasion or scratch. However, previous attempts at creating abrasion resistant coatings have required large amounts of abrasion resistant particle - namely, aluminum oxide - and have failed to appreciate the benefits of a combination of hard particles as well as the size distribution of abrasion resistant particles, thereby leading to inefficient usage of abrasion resistant material in coatings. Moreover, previous attempts failed to appreciate the sole or combined use of diamonds, whether natural or synthetic, in such abrasion resistant coatings.

Moreover, curable coating compositions in use today rely on polyacrylate-based chemistry. In particular, photoinitiators present in polyacrylate-based coating compositions will absorb light and produce free radicals when exposed to, e.g., conventional UV lamps; the free radicals then initiate crosslink reactions of the polyacrylate-based coating composition, i.e., a radical reaction/polymerization. A major drawback of such compositions, however, is that they suffer from oxygen inhibition. The problem becomes even worse when using UV LED to cure the systems. Therefore, curing of coating compositions has required strict, low-oxygen conditions.

Therefore, it is an object of the present invention to provide coating compositions or systems that can cure in the presence of oxygen, including atmospheric levels of oxygen.

It is another object of the present invention to provide coating compositions or systems that incorporate abrasion resistant material, and particularly diamond material, that can cure in the presence of oxygen, including atmospheric levels of oxygen.

It is a further object of the present invention to provide such coating compositions or systems that can be cured on command, e.g., when subjected to specific UV light.

It is an even further object of the present invention to coat substrates with such compositions.

It is yet a further object of the present invention to incorporate such coated substrates into floor coverings and other goods.

These objectives, as well as other objectives, are realized through the below described and claimed inventions.

US 2006/0242910A1 describes an abrasive article having a layer including an epoxy constituent, a cationic photoinitiator within the epoxy constituent, and a latent colorant configured to change color in response to activation of the cationic photoinitiator.

US 2003/0200701A1 describes coated abrasive articles comprising a backing and an abrasive layer, and optionally at least one of a backsize layer, tie layer, supersize layer, presize layer, or saturant. The coating abrasive article comprises a reaction product of components comprising polyfunctional acrylate, polyfunctional cationically polymerizable material, free radical photoinitiator, a triarylsulfonium salt and a quaternary ammonium salt..

### SUMMARY OF THE INVENTION

The present invention combines either cationic cured resin systems or thiol-ene cured resin systems with at least one abrasion resistant material, such as, e.g., diamond, in order to prepare compositions that can be coated (as one or more layers) onto substrates even in the presence of oxygen, including atmospheric levels of oxygen. Once cured by UV light, these coatings are highly durable and resist both scratching and staining. Methods for testing the durability can be found in the application that was filed concurrently or approximately herewith, bearing Attorney Reference No. 2589-22 P (U.S. Provisional Application Serial No. 62/404,389, filed October 5, 2016, titled "Testing of Wear Resistance").

### Definitions

For purposes of this disclosure, the following definitions apply.

"Abrasion resistant material" is any material that imparts such strength to a composition such that the composition is able to resist abrasions to a greater extent as compared to a composition without the abrasion resistant material. A composition may include more than one type and/or size of abrasion resistant material. Examples of abrasion resistant material include diamond material, aluminum oxide, feldspar, spinels, topaz, and quartz. Other examples of abrasion resistant material may include any material that has a Mohs hardness value of about 6 or greater.

"Average coating thickness" is a measurement of the average distance between a top surface of a layer and the bottom surface of that same layer. The various measurements taken to generate an average must all be taken from the same coating layer. The various measurements may not be taken in different coating layers, even if layered on top of each other. Therefore, a substrate that has, e.g., three coating layers will have three "average coating thickness" values (although the values themselves may be the same as, or different from, each other). In general, over 10 square foot of substrate, at least three random measurements, and preferably about five random measurements, should be taken in order to generate an average coating thickness value, etc. Thus, in a 20 square foot area, at least six random measurements, and preferably about ten random measurements, should be taken in order to generate an average coating thickness value, etc.

"Average diameter" is calculated by measuring the diameter of each piece of a material (e.g., diamond material), and then calculating the average. If the material (e.g., diamond material) has different diameters, e.g., if the material (e.g., diamond material) is not a sphere, then the average diameter is calculated by measuring the longest diameter of each piece of material (e.g., diamond material), and then calculating the average. It should be noted that any calculations involving material (e.g., distance between pieces of a material, distance of some material from a layer's surface, etc.) should use the relevant edge of the material, as opposed to the center of the material.

"Blank layer" is a coating layer that excludes both cationic cured resin systems as well as thiol-ene cured systems. The blank layer may or may not be based on polyacrylate chemistry. Moreover, the blank layer may include any other materials including, but not limited to, abrasion resistant materials.

"Cationic curing" or similar is a different process from cures that use free radicals, such as in polyacrylate chemistry. In particular, a cationic cure requires the application of an appropriate radiation to the composition, resulting in the photoinitiator converting into an acid. This acid causes certain molecules to convert into highly reactive, positively charged cations. These cations initiate polymerization through well-understood chemistry, through to completion.

"Coating" or "coating layer" means a composition that has been applied to a surface, such as a substrate, and then cured. "Coating" may refer to a single coating layer or to the totality of coating layers. Coating layers may be the same as, or different from, each other in terms of composition, average thickness, etc.

"Curing" or "cured" or similar means the process whereby polymeric materials are formed by cross-linking, creating properties such as (but not limited to) increased viscosity and hardness. The curing process may be initiated via several methods, e.g., application of heat and/or radiation such as (but not limited to) light, e.g., visible light or UV light. A "complete cure" or similar means that all polymeric materials have cross-linked. "Substantially complete cure" or similar means that the vast majority of polymeric materials have cross-linked such that it is difficult or impossible to determine if a "complete cure" has taken place. A "partial cure" or "partially complete cure" or similar means that the curing process has been initiated but has not yet reached the point of meeting the definition of a "complete cure" or of a "substantially complete cure".

"Dark cure" or similar takes place when a cationic curing process is begun and then the composition is covered by an opaque material, but the curing process continues (at least for a short period of time). That is, at least a portion of the curing process may occur after radiation is no longer applied.

"Dispersing agent" is any chemical or compound that acts to distribute, or to assist in distributing, at least the abrasion resistant material throughout a composition prior to curing.

"Floor covering" is any substrate which may be useful in creating a floor surface in building operations. The substrate forming the floor covering may be either coated with at least one coating layer, or it may be uncoated.

"Photoinitiation system" means a photoinitiator either alone or with a cooperating photosensitizer.

"Photoinitiator" is a chemical that, upon exposure to a certain radiation, e.g., light, such as visible or UV light, creates reactive species such as free radicals, cations or anions. For example, a "cationic photoinitiator" is a photoinitiator that creates a cation.

"Photosensitizer" is a chemical that, after exposure to a certain radiation, e.g., light, such as visible light or UV light, is then able to transfer that radiation to another chemical, e.g., to a photoinitiator.

"Shadow cure" or similar refers to the fact that certain cationic species can last for relatively long periods of time. Thus, they may migrate into areas of the composition that were not exposed to radiation and will thus continue the curing process, for at least a short duration of time.

"Substrate" is any material upon which one or more coating layers are able to be applied. In some instances, a substrate coated with a coating layer may be considered to form another substrate. For example, a substrate may be, e.g., a vinyl tile. However, a vinyl tile with a coating layer on its surface may also be considered to be a substrate.

"Thiol-ene curing" or similar is another curing process that differs from cures that use free radicals, such as in polyacrylate chemistry. In particular, in some instances, a thiol-ene cure requires the application of an appropriate radiation to the composition, resulting in the photoinitiator becoming radicalized. In other instances which do not require a photoinitiator, the thiol itself becomes radicalized. Through well-understood chemistry, the radicalized molecule then condenses with an unsaturated alkene, which yields another radicalized molecule; this radicalized molecule then reacts with another thiol, which yields yet another radicalized molecule; this radicalized molecule then reacts with another unsaturated alkene, etc.

The use of the articles "a" or "the" should not be construed as terms of limitation; rather, they should be construed as including both "one" and "more than one", unless otherwise specified or inherently indicated by either operation of language or law. That is, reference to, e.g., "a resin" or "the resin" should also be construed as including, e.g., "at least one resin", etc.

Other relevant information and/or definitions may be found in several other applications that were filed concurrently or approximately with the present application, bearing Attorney Reference Nos. 2589-21 P (U.S. Provisional Application Serial No. 62/404,479, filed October 5, 2016, titled "Floor Coatings Comprising a Resin, a Cure System and Diamond Particles and Methods of Making the Same"), 2589-22 P (U.S. Provisional Application Serial No. 62/404,389, filed October 5, 2016, titled "Testing of Wear Resistance"), 2589-24 P (U.S. Provisional Application Serial No. 62/404,503, filed October 5, 2016, titled "LED Curable Coatings for Flooring Comprising Diamond Particles and Methods of Making the Same"), and 2589-25 P (U.S. Provisional Application Serial No. 62/404,534, filed October 5, 2016, titled "Surface Covering with Wear Layer Having Dispersed Therein Wear-Resistant Additives and Method of Making the Same").

The invention is capable of being realized and expressed in many different embodiments.

In one aspect, there is provided a cationic cured resin system, the system including a resin, a polyol, a photoinitiation system, and a diamond material as an abrasion resistant material. In some embodiments, there is also a dispersing agent.

In a related aspect of the cationic cured resin system, the resin may be a vinyl ether resin, an epoxy resin or a combination of both. In the aspect where the resin is a vinyl ether resin, it may be 1,4-butanediol divinyl ether; 1,3-propanediol divinyl ether; 1,6-hexanediol divinyl ether; 1,4-cyclohexanedimethylol divinyl ether; diethyleneglycol divinyl ether; triethyleneglycol divinyl ether; n-butyl vinyl ether; tert-butyl vinyl ether; cyclohexyl vinyl ether; dodecyl vinyl ether; octadecyl vinyl ether; trimethylolpropane diallyl ether; allyl pentaerythritol; trimethylolpropane monoallyl ether; or a combination of any of the foregoing. In the aspect where the resin is an epoxy resin, it may be 3,4-epoxycyclohexylmethyl-3,4-epoxycyclohexane carboxylate; bis-(3,4-epoxycyclohexyl) adipate; 3-ethyl-3-hydroxy-methyl-oxetane; 1,4-butanediol diglycidyl ether; 1,6 hexanediol diglycidyl ether; ethylene glycol diglycidyl ether; polypropylene glycol diglycidyl ether; polyglycol diglycidyl ether; propoxylated glycerin triglycidyl ether; monoglycidyl ester of neodecanoic acid; epoxidized soy; epoxidized linseed oil; epoxidized polybutadiene resins; or a combination of any of the foregoing.

In some aspects of the cationic cured resin system, the polyol may be diethylene glycol; neopentyl glycol; glycerol; trimethylol propane; polyether polyols including, but not limited to, polytetramethylene ether glycol; polyester polyols including, but not limited to, caprolactone diol and caprolactone triol, as well as combinations of both; aliphatic polyester polyols derived from diacids or diols; aromatic polyester polyols derived from diacids or diols; 1,3-propanediol; 1,4-butanediol; 1,6-hexanediol; 1,4-cyclohexanedimethylol; derivatives thereof; or a combination of any of the foregoing.

In other aspects of the cationic cured resin system, the photoinitiation system includes a photoinitiator and, optionally, a photosensitizer. In related aspects, the photoinitiator is a cationic photoinitiator including, but not limited to, iodonium salts and sulfonium salts, or combinations of both. The iodonium salts may include, but are not limited to, bis(4-methylphenyl)-hexafluorophosphate-(1)-iodonium. The sulfonium salts may include, but are not limited to, triarylsulfonium hexafluoroantimonate salts and triarylsulfonium hexafluorophosphate salts, or combinations of both. In other related aspects, the photosensitizer (when present) may include, but is not limited to, isopropyl thioxanthone, 1-chloro-4-propoxy-thioxanthone, 2,4-diethylthioxanthone and 2-chlorothioxanthone, or combinations of the foregoing.

In another aspect of the cationic cured resin system, the diamond material includes, but is not limited to, diamond particles, diamond dust, diamond shards, diamond fragments and whole diamonds, or combinations of the foregoing. In related aspects the average diameter of the diamond material may be in the nanometer range or in the micrometer range. For example, when in the nanoparticle range, the average diameter may be in ranges of from about 0.1 nm to about 1,000 nm; preferably from about 0.2 nm to about 900 nm; more preferably from about 0.5 nm to about 800 nm; even more preferably from about 1 nm to about 600 nm; yet even more preferably from about 2 nm to about 500 nm; and most preferably from about 10 nm to about 500 nm, from about 20 nm to about 500 nm, from about 20 nm to about 200 nm, from about 25 nm to about 250 nm, from about 35 nm to about 175 nm, from about 50 nm to about 150 nm, from about 75 nm to about 125 nm or from about 20 nm to about 40 nm.

When in the micrometer range, the average diameter may be in ranges of from about 0.01 µm to about 100 µm; preferably from about 0.1 µm to about 75 µm; more preferably from about 0.5 µm to about 100 µm, from about 0.5 µm to about 50 µm, or from about 6 µm to about 30 µm; even more preferably from about 0.75 µm to about 25 µm; yet even more preferably from about 1 µm to about 10 µm; and most preferably from about 1 µm to about 5 µm, from about 5 µm to about 10 µm, from about 2.5 µm to about 7.5 µm, or from about 6 µm to about 10 µm.

In other aspects of the cationic cured resin system, there may be two different abrasion resistant materials, with at least one of the materials being the diamond material. The second material may also be a diamond material; alternatively, the second material may be any material that has a Mohs hardness value of at least 6 including, but not limited to, aluminum oxide, feldspar, spinels, topaz, and quartz, or combinations thereof. The average diameter of one of the abrasion resistant materials may be in the nanometer range, while the other abrasion resistant material may have an average diameter in the micrometer range.

In a preferred aspect, the first abrasion resistant material has an average diameter of about 2.0 nm to about 500 nm, and the second abrasion resistant material has an average diameter of about 0.5 µιη to about 100 µιη. Preferably, at least one of the two abrasion resistant materials is a diamond material.

In another preferred aspect, the first abrasion resistant material has an average diameter of about 20 nm to about 200 nm, and the second abrasion resistant material has an average diameter of about 6 µιη to about 30 µιη. Preferably, at least one of the two abrasion resistant materials is a diamond material.

In another preferred aspect, the first abrasion resistant material has an average diameter of from about 2.0 nm to about 500 nm, preferably from about 20 nm to about 200 nm, and the second abrasion resistant material has an average diameter of from about 2.0 nm to about 500 nm, preferably from about 20 nm to about 200 nm. Preferably, at least one of the two abrasion resistant materials is a diamond material.

In another preferred aspect, the first abrasion resistant material has an average diameter of from about 0.5 µιη to about 100 µιη, preferably from about 6 µπι to about 30 µιη, and the second abrasion resistant material has an average diameter of from about 0.5 µιη to about 100 µηι, preferably from about 6 µιη to about 30 µιη. Preferably, at least one of the two abrasion resistant materials is a diamond material.

In another preferred aspect, there is at least a third abrasion resistant material. The third abrasion resistant material may also be a diamond material; alternatively, the third abrasion resistant material may be any material that has a Mohs hardness value of at least 6 including, but not limited to, aluminum oxide, feldspar, spinels, topaz, and quartz, or combinations thereof. The average diameter of the third abrasion resistant material may be in the same range as the first abrasion resistant material and/or the second abrasion resistant material.

In another preferred aspect, there is at least a third abrasion resistant material. The third abrasion resistant material may also be a diamond material; alternatively, the third abrasion resistant material may be any material that has a Mohs hardness value of at least 6 including, but not limited to, aluminum oxide, feldspar, spinels, topaz, and quartz, or combinations thereof. The average diameter of the third abrasion resistant material may be in the same range as the first abrasion resistant material and/or the second abrasion resistant material.

In some aspects of the cationic cured resin system, the system can be cured by exposure to UV light, such as (but not limited to) UV LED light or UV light from an arc lamp. In some aspects, the UV light has germicidal properties. In other aspects, the UV light has a wavelength of about 160 nm to about 450 nm.

In other aspects of the cationic cured resin system, the system includes an additive including, but not limited to, a gloss adjuster.

In even other aspects of the cationic cured resin system, the diamond material is synthetic, although natural diamond material may also be used.

In another aspect of the invention, there is provided a thiol-ene cured system, the system including a thiol, an alkene, and a diamond material as an abrasion resistant material. In some embodiments, there is also either a photoinitiation system, a dispersing agent or both.

In a related aspect of the thiol-ene cured system, the thiol is an alkyl 3-mercaptopropionate including, but not limited to pentaerythritol tetra(3-mercaptopropionate) and trimethylolpropane tri(3-mercaptopropionate); an alkythioglycolate including, but not limited to butyl thioglycolate and 2-Ethylhexyl thioglycolate; an alkyl thiol including, but not limited to 2-ethylhexyl thiol, 1-Butanethiol and 2-methyl-2-propanethiol; or combinations of the foregoing.

In another aspect of the thiol-ene cured system, the alkene is a vinyl group or an allyl group, or a combination of both. For example, the alkene may be diethylene glycol divinyl ether (DEGDVE), triethyleneglycol divinyl ether (TEGDVE), butanediol divinyl ether (BDDVE), pentaerythritol allyl ether (PETAE), triallyl iscocyanurate (TAIC) or tris[4-(vinyloxy)butyl)trimellitate, or a combination of the foregoing.

In other aspects of the thiol-ene cured system, the photoinitiation system includes a photoinitiator and, optionally, a photosensitizer. In related aspects, the photoinitiator is a Norrish type I photoinitiator, a Norrish type II photoinitiator, or a combination of both.

In another aspect of the thiol-ene cured system, the diamond material includes, but is not limited to, diamond particles, diamond dust, diamond shards, diamond fragments and whole diamonds, or combinations of the foregoing. In related aspects the average diameter of the diamond material may be in the nanometer range or in the micrometer range. For example, when in the nanoparticle range, the average diameter may be in ranges of from about 0.1 nm to about 1,000 nm; preferably from about 0.2 nm to about 900 nm; more preferably from about 0.5 nm to about 800 nm; even more preferably from about 1 nm to about 600 nm; yet even more preferably from about 2 nm to about 500 nm; and most preferably from about 10 nm to about 500 nm, from about 20 nm to about 500 nm, from about 20 nm to about 200 nm, from about 25 nm to about 250 nm, from about 35 nm to about 175 nm, from about 50 nm to about 150 nm, from about 75 nm to about 125 nm or from about 20 nm to about 40 nm.

When in the micrometer range, the average diameter may be in ranges of from about 0.01 µm to about 100 µm; preferably from about 0.1 µm to about 75 µm; more preferably from about 0.5 µm to about 100 µm, from about 0.5 µm to about 50 µm, or from about 6 µm to about 30 µm; even more preferably from about 0.75 µm to about 25 µm; yet even more preferably from about 1 µm to about 10 µm; and most preferably from about 1 µm to about 5 µm, from about 5 µm to about 10 µm, from about 2.5 µm to about 7.5 µm, or from about 6 µm to about 10 µm.

In other aspects of the thiol-ene cured system, there may be two different abrasion resistant materials, with at least one of the materials being the diamond material. The second material may also be a diamond material; alternatively, the second material may be any material that has a Mohs hardness value of at least 6 including, but not limited to, aluminum oxide, feldspar, spinels, topaz, and quartz, or combinations thereof. The average diameter of one of the abrasion resistant materials may be in the nanometer range, while the other abrasion resistant material may have an average diameter in the micrometer range. Alternatively, both abrasion resistant materials may have average diameters in the nanometer range, or both abrasion resistant materials may have average diameters in the micrometer range.

In a preferred aspect, the first abrasion resistant material has an average diameter of about 2.0 nm to about 500 nm, and the second abrasion resistant material has an average diameter of about 0.5 µm to about 100 µm. Preferably, at least one of the two abrasion resistant materials is a diamond material.

In another preferred aspect, the first abrasion resistant material has an average diameter of about 20 nm to about 200 nm, and the second abrasion resistant material has an average diameter of about 6 µm to about 30 µm. Preferably, at least one of the two abrasion resistant materials is a diamond material.

In another preferred aspect, the first abrasion resistant material has an average diameter of from about 2.0 nm to about 500 nm, preferably from about 20 nm to about 200 nm, and the second abrasion resistant material has an average diameter of from about 2.0 nm to about 500 nm, preferably from about 20 nm to about 200 nm. Preferably, at least one of the two abrasion resistant materials is a diamond material.

In another preferred aspect, the first abrasion resistant material has an average diameter of from about 0.5 µm to about 100 µm, preferably from about 6 µm to about 30 µm, and the second abrasion resistant material has an average diameter of from about 0.5 µm to about 100 µm, preferably from about 6 µm to about 30 µm. Preferably, at least one of the two abrasion resistant materials is a diamond material.

In another preferred aspect, there is at least a third abrasion resistant material. The third abrasion resistant material may also be a diamond material; alternatively, the third abrasion resistant material may be any material that has a Mohs hardness value of at least 6 including, but not limited to, aluminum oxide, feldspar, spinels, topaz, and quartz, or combinations thereof. The average diameter of the third abrasion resistant material may be in the same range as the first abrasion resistant material and/or the second abrasion resistant material.

In some aspects of the thiol-ene cured system, the system can be cured by exposure to UV light, such as (but not limited to) UV LED light or UV light from an arc lamp. In some aspects, the UV light has germicidal properties. In other aspects, the UV light has a wavelength of about 160 nm to about 450 nm.

In other aspects of the thiol-ene cured system, the system includes an additive including, but not limited to, a gloss adjuster.

In even other aspects of the thiol-ene cured system, the diamond material is synthetic, although natural diamond material may also be used.

Another aspect of the present invention includes a method of coating a substrate with at least one coating layer. The coating layer includes any of the above-described systems, i.e., either the cationic cured resin system or the thiol-ene cured system. If using the cationic cured resin system, the steps of the method include combining the resin, the polyol, the photoinitiation system and (if used) the dispersing agent to form a first pre-resin system. The first pre-resin system is then combined with the abrasion resistant material to form a second pre-resin system. The second pre-resin system is then applied via well-known methods to a substrate, and it is then cured on the substrate by exposure to light (e.g., UV or visible light). This method may optionally be carried out in the field; it may also be carried out in, e.g., an industrial/manufacturing/production setting. It should be noted that additional coating layers may be added by repeating these steps.

In a related aspect, the first pre-resin system is applied to a substrate prior to being combined with the abrasion resistant material. In this aspect, once the first pre-resin system is applied to the substrate, only then is the abrasion resistant material added to the first pre-resin system, resulting in a second pre-resin system. The second pre-resin system is then cured by exposure to light (e.g., UV or visible light). This method may optionally be carried out in the field; it may also be carried out in, e.g., an industrial/manufacturing/production setting. It should be noted that additional coating layers may be added by repeating these steps.

In another related aspect, the method may instead include the thiol-ene cured system. In this method, the thiol and alkene are combined (if the photoinitiation system or the dispersing agent are used, they are also combined during this step) to form a first pre-thiol-ene cured system. The first pre-thiol-ene cured system is then combined with the abrasion resistant material to form a second pre-thiol-ene cured system. The second pre-thiol-ene cured system is then applied via well-known methods to a substrate, and it is then cured on the substrate by exposure to light (e.g., UV or visible light). This method may optionally be carried out in the field; it may also be carried out in, e.g., an industrial/manufacturing/production setting. It should be noted that additional coating layers may be added by repeating these steps.

In yet another related aspect, the first pre-thiol-ene cured system is applied to a substrate prior to being combined with the abrasion resistant material. In this aspect, once the first pre-thiol-ene cured system is applied to the substrate, only then is the abrasion resistant material added to the first pre-thiol-ene cured system, resulting in a second pre-thiol-ene cured system. The second pre-thiol-ene cured system is then cured on the substrate by exposure to light (e.g., UV or visible light). This method may optionally be carried out in the field; it may also be carried out in, e.g., an industrial/manufacturing/production setting. It should be noted that additional coating layers may be added by repeating these steps.

In some aspects of the above methods, the light is UV light produced by either a UV LED light, a UV arc lamp, or both. The UV light, which is optionally germicidal, may have a wavelength of from about 160 nm to about 450 nm. In some aspects of the above methods, the light is provided for a period of time of from about 1 second to about 180 seconds.

In other aspects of the invention, the coating layer (or layers) may have an average thickness of from about 0.1 µm to about 500 µm; preferably from about 0.5 µm to about 250 µm; more preferably from about 1 µm to about 150 µm; yet even more preferably from about 2 µm to about 100 µm; and most preferably from about 2 µm to about 50 µm, from about 4 µm to about 40 µm, or from about 6 µm to about 20 µm.

In certain aspects of the invention, the invention provides a floor covering which includes a substrate prepared according to any of the above-described methods. The substrate may be, but is not necessarily limited to, tile (e.g., vinyl tile, ceramic tile, porcelain tile and wood tile), linoleum, laminate, engineered wood, wood (e.g., ash, birch, cherry, exotic, hickory, maple, oak, pecan and walnut), cork, stone, bamboo, vinyl sheet, and combinations of any of the foregoing.

In other aspects of the invention, the invention provides a coating composition. The coating composition can include any of the above discussed systems.

In related aspects, the invention provides a floor covering which includes a substrate, the substrate including at least one coating layer. In these aspects, the coating layer includes the above-described coating composition. Moreover, the substrate may optionally be, but is not necessarily limited to, tile (e.g., vinyl tile, ceramic tile, porcelain tile and wood tile), linoleum, laminate, engineered wood, wood (e.g., ash, birch, cherry, exotic, hickory, maple, oak, pecan and walnut), cork, stone, bamboo, vinyl sheet, and combinations of any of the foregoing. Further, the coating layer may optionally have an average thickness ranging from about 0.1 µm to about 500 µm; preferably from about 0.5 µm to about 250 µm; more preferably from about 1 µm to about 150 µm; yet even more preferably from about 2 µm to about 100 µm; and most preferably from about 2 µm to about 50 µm, from about 4 µm to about 40 µm, or from about 6 µm to about 20 µm. Additional coating layers may also be included, the additional coating layers also including the above-described coating composition.

Other aspects of the invention provide that the abrasion resistant material in any of the coating layers of the above-described floor coverings is present in an amount of less than 12.0 wt.%, preferably less than 10.0 wt.%, even more preferably less than 5.50 wt.%, based on the weight of the coating layer.

In other aspects, the abrasion resistant material in any of the coating layers of the above-described floor coverings is present in an amount of at least 1.50 wt.%, preferably at least 2.0 wt.%, even more preferably at least 6.0 wt.%, based on the weight of the coating layer.

In another aspect of the invention, the invention provides a substrate coated with at least one coating layer, the coating layer including the above-described coating composition. The substrate may optionally be, but is not necessarily limited to, tile (e.g., vinyl tile, ceramic tile, porcelain tile and wood tile), linoleum, laminate, engineered wood, wood (e.g., ash, birch, cherry, exotic, hickory, maple, oak, pecan and walnut), cork, stone, bamboo, vinyl sheet, and combinations of any of the foregoing. Further, the coating layer may optionally have an average thickness ranging from about 0.1 µm to about 500 µm; preferably from about 0.5 µm to about 250 µm; more preferably from about 1 µm to about 150 µm; yet even more preferably from about 2 µm to about 100 µm; and most preferably from about 2 µm to about 50 µm, from about 4 µm to about 40 µm, or from about 6 µm to about 20 µm. The substrate may include one or more coating layers, each coating layer including the above-described coating composition.

A further aspect of the invention provides a multi-layered floor covering, which includes a substrate as well as a multi-layered coating on the substrate. The substrate may optionally be, but is not necessarily limited to, tile (e.g., vinyl tile, ceramic tile, porcelain tile and wood tile), linoleum, laminate, engineered wood, wood (e.g., ash, birch, cherry, exotic, hickory, maple, oak, pecan and walnut), cork, stone, bamboo, vinyl sheet, and combinations of any of the foregoing. The multi-layered coating includes at least two layers, i.e., a base layer which is on top of the substrate, and a top layer. The top layer may be on top of the base layer, or there may be an intervening print layer and/or wear layer. In general, when both the print layer and the wear layer are present, the print layer will be directly on top of the base layer, the wear layer will be directly on top of the print layer, and the top layer will be directly on top of the print layer. If only one intervening layer is present, then the top layer will be on top of the intervening layer, and the intervening layer will be on top of the base layer. At least one of these layers will include any of the above-described coating compositions. Moreover, any of these layers (i.e., the base layer, the top layer or the intervening print and wear layers) may have an average thickness of from about 0.1 µm to about 500 µm; preferably from about 0.5 µm to about 250 µm; more preferably from about 1 µm to about 150 µm; yet even more preferably from about 2 µm to about 100 µm; and most preferably from about 2 µm to about 50 µm, from about 4 µm to about 40 µm, or from about 6 µm to about 20 µm.

In another aspect of the invention, the abrasion resistant material may protrude from the top surface of a coating layer at a distance of from about 1-50% of the average coating thickness. The ratio of the average coating thickness to the average diameter of the abrasion resistant material may sometimes be in the range of from about 0.6:1 to about 2:1. In some instances, the average distance between two pieces of abrasion resistant material is from about 20-75 µm.

In a related aspect of the invention, the abrasion resistant material may be submerged beneath the top surface of a coating layer at a distance of from about 1-50% of the average coating thickness. The ratio of the average coating thickness to the average diameter of the abrasion resistant material may sometimes be in the range of from about 0.6:1 to about 2:1. In some instances, the average distance between two pieces of abrasion resistant material is from about 20-75 µm.

In another related aspect of the invention, the abrasion resistant material may be submerged beneath the top surface of a coating layer at a distance of from about 1-25% of the average coating thickness. The abrasion resistant material is vertically offset from the bottom surface of the coating layer by about 1-25% of the average coating thickness. The ratio of the average coating thickness to the average diameter of the abrasion resistant material may sometimes be in the range of from about 0.6:1 to about 2:1. In some instances, the average distance between two pieces of abrasion resistant material is from about 20-75 µm.

In yet another aspect of the invention, a substrate may be coated with at least two coating layers. However, only one of the coating layers includes any of the above-described coating compositions. The other coating layer is a blank layer that excludes any of the above-described coating compositions. The blank layer may be based on polyacrylate chemistry. However, the blank layer may also exclude polyacrylate chemistry as a basis. Regardless of its type of chemistry, the blank layer may include abrasion resistant material.

### DETAILED DESCRIPTION

Non-acrylate based curing systems, which include abrasion resistant materials, are disclosed herein. In particular, the curing systems are based on cationic chemistry or thiol-ene chemistry. Moreover, the abrasion resistant material in each system is at least a diamond material; however, it is envisioned that additional abrasion resistant materials, such as a second diamond material or another secondary material, may also be included. In some instances the secondary material may be aluminum oxide (also known as corundum), feldspar, spinels, topaz, or quartz, or combinations of the foregoing. In other instances, the secondary material may be any material that has a hardness of at least about a 6 or higher on the Mohs hardness scale.

### Cationic Curing

Cationic curing is a well-known chemical process; however, it has never before been combined with abrasion resistant material, such as diamond material, in a coating for use on surfaces, e.g., floors. The results of such combination have been surprising, especially considering that the coatings can be applied in the field, i.e., under normal oxygen-level conditions.

Cationic curing requires the combination of a resin, a polyol, and a photoinitiation system. The present invention also requires the presence of an abrasion resistant material, comprising diamond material. Optionally, a dispersing agent may be included, which serves to distribute, or to assist in distributing, the abrasion resistant material. There are at least two methods by which the cationic cured coating may be applied to a substrate.

In the first cationic cure method, the resin, polyol and photoinitiation system are combined together to form a first pre-resin system. The abrasion resistant material is then added to the first pre-resin system to create a second pre-resin system. The second pre-resin system is then applied to the substrate, after which the curing process may be initiated by application of light, generally UV light. The dispersing agent may be added to either the first or second pre-resin system. Under this method, in practice, the order in which the ingredients are combined does not matter. Therefore, even though the above method is described as combining the resin, polyol and photoinitiation system first, it is envisioned that the abrasion resistant material may be added in at any time. Importantly, the combination of the ingredients must be completed, resulting in the second pre-resin system, prior to application to a substrate. Once the curing process has partially or substantially completed to form a coating layer on the substrate, a second, third, etc. layer may be added by repeating the above steps or by following the other methods described herein (e.g., a thiol-ene cure method). It is also envisioned that a layer based on a different chemistry (e.g., polyacrylate chemistry) may also be included.

In the second cationic cure method, the resin, polyol and photoinitiation system are combined to form a first pre-resin system. The first pre-resin system is then applied to the substrate, i.e., before the addition of the abrasion resistant material. Once the substrate has received the first pre-resin system, the abrasion resistant material is then added, e.g., by sprinkling or spraying methods; this results in the formation of the second pre-resin system. The curing process may then be initiated by application of light, generally UV light. The dispersing agent, if present, may be added to either the first or second pre-resin system. Importantly, this second cationic cure method requires that the first pre-resin system be created and applied to a substrate prior to combination with the abrasion resistant material. Significantly, this allows for the use of pre-mixed first pre-resin systems. Once the curing process has partially or substantially completed to form a coating layer on the substrate, a second layer may be added by repeating the above steps or by following the other methods described herein (e.g., a thiol-ene cure method). It is also envisioned that a layer based on a different chemistry (e.g., polyacrylate chemistry) may also be included.

The resin itself may be any resin known to a skilled artisan. Useful resins include, but are not limited to, vinyl ether resins and epoxy resins. Examples of vinyl ether resins include, but are not limited to, 1,4-butanediol divinyl ether; 1,3-propanediol divinyl ether; 1,6-hexanediol divinyl ether; 1,4-cyclohexanedimethylol divinyl ether; diethyleneglycol divinyl ether; triethyleneglycol divinyl ether; n-butyl vinyl ether; tert-butyl vinyl ether; cyclohexyl vinyl ether; dodecyl vinyl ether; octadecyl vinyl ether; trimethylolpropane diallyl ether; allyl pentaerythritol; and trimethylolpropane monoallyl ether. Examples of epoxy resins include, but are not limited to, 3,4-epoxycyclohexylmethyl-3,4-epoxycyclohexane carboxylate; bis-(3,4-epoxycyclohexyl) adipate; 3-ethyl-3-hydroxy-methyl-oxetane; 1,4-butanediol diglycidyl ether; 1,6 hexanediol diglycidyl ether; ethylene glycol diglycidyl ether; polypropylene glycol diglycidyl ether; polyglycol diglycidyl ether; propoxylated glycerin triglycidyl ether; monoglycidyl ester of neodecanoic acid; epoxidized soy; epoxidized linseed oil; and epoxidized polybutadiene resins. Any combination of any of the foregoing resins (or any other useful resin known to a skilled artisan) is also envisioned.

The polyol may be any polyol known to a skilled artisan. Useful polyols include, but are not limited to, diethylene glycol; neopentyl glycol; glycerol; trimethylol propane; polyether polyols (e.g., polytetramethylene ether glycol); polyester polyols (e.g., caprolactone diol; caprolactone triol); aliphatic polyester polyols derived from diacids or diols; aromatic polyester polyols derived from diacids or diols; 1,3-propanediol; 1,4-butanediol; 1,6-hexanediol; 1,4-cyclohexanedimethylol; and derivatives thereof. Any combination of any of the foregoing polyols (or any other useful polyol known to a skilled artisan) is also envisioned.

The photoinitiation system for the cationic cure system includes at least a photoinitiator, which should be a cationic photoinitiator. Examples include, but are not limited to, iodonium salts (e.g., bis(4-methylphenyl)-hexafluorophosphate-(1)-iodonium) and sulfonium salts (e.g., triarylsulfonium hexafluoroantimonate salts; triarylsulfonium hexafluorophosphate salts). Any combination of any of the foregoing photoinitiators (or any other useful photoinitiators known to a skilled artisan) is also envisioned.

The photoinitiation system for the cationic cure system may optionally include a photosensitizer. Examples include, but are not limited to, isopropyl thioxanthone; 1-chloro-4-propoxy-thioxanthone; 2,4-diethylthioxanthone; and 2-chlorothioxanthone. Any combination of any of the foregoing photosensitizers (or any other useful photosensitizers known to a skilled artisan) is also envisioned.

Other useful additives known to those of skill in the art may also be included in the cationic cured resin system of the present invention. One such useful additive is a gloss adjuster. The invention may further include comprising a catalyst, a stabilizer, a modifier, a processing aid, an internal and external lubricant package, an ultraviolet absorber, tint, pigments, other specialty additives, or any combination thereof. Additional wear resistant additives such as aluminum oxide (Al₂O₃) particles, crystalline classes of silicon carbide, hard plastics, reinforced polymers, nylon, organics, or any combination thereof may also be included in the invention.

The cationic cure resin system may be cured through the application of light. UV light is preferred, especially UV light produced by a UV LED light or by a UV arc lamp. In some instances, the UV light may have germicidal properties. In general, the UV light should have a wavelength of from about 160 to about 450 nm. It is preferred that the UV light be applied for a time period of about 1 second to about 180 seconds.

### Thiol-ene Curing

Thiol-ene curing is also a well-known chemical process; however, it has never before been combined with abrasion resistant material, such as diamond material, in a coating for use on surfaces, e.g., floors. The results of such combination have been surprising, especially considering that the coatings can be applied in the field, i.e., under normal oxygen-level conditions.

Thiol-ene curing requires the combination of a thiol and an alkene. Under thiol-ene curing, the photoinitiation system is optional. The present invention also requires the presence of an abrasion resistant material, comprising diamond material. Optionally, a dispersing agent may be included, which serves to distribute, or to assist in distributing, the abrasion resistant material. There are at least two methods by which the thiol-ene cured coating may be applied to a substrate.

In the first thiol-ene cure method, the thiol and alkene, and optionally the photoinitiation system, are combined together to form a first pre-thiol-ene cured system. The abrasion resistant material is then added to the first pre-thiol-ene cured system to create a second pre-thiol-ene cured system. The second pre-thiol-ene cured system is then applied to the substrate, after which the curing process may be initiated by application of light, generally UV light. The dispersing agent may be added to either the first or second pre-thiol-ene cured system. Under this method, in practice, the order in which the ingredients are combined does not matter. Therefore, even though the above method is described as combining the thiol and alkene, and optionally the photoinitiation system, first, it is envisioned that the abrasion resistant material may be added in at any time. Importantly, the combination of the ingredients must be completed, resulting in the second pre-thiol-ene cured system, prior to application to a substrate. Once the curing process has partially or substantially completed to form a coating layer on the substrate, a second, third, etc. layer may be added by repeating the above steps or by following the other methods described herein (e.g., a cationic cure method). It is also envisioned that a layer based on a different chemistry (e.g., polyacrylate chemistry) may also be included.

In the second thiol-ene cure method, the thiol and alkene, and optionally the photoinitiation system, are combined to form a first pre-thiol-ene cured system. The first pre-thiol-ene cured system is then applied to the substrate, i.e., before the addition of the abrasion resistant material. Once the substrate has received the first pre-thiol-ene cured system, the abrasion resistant material is then added, e.g., by sprinkling or spraying methods; this results in the formation of the second pre-thiol-ene cured system. The curing process may then be initiated by application of light, generally UV light. The dispersing agent, if present, may be added to either the first or second pre-thiol-ene cured system. Importantly, this second thiol-ene cure method requires that the first pre-thiol-ene cured system be created and applied to a substrate prior to combination with the abrasion resistant material. Significantly, this allows for the use of pre-mixed first pre-thiol-ene cured systems. Once the curing process has partially or substantially completed to form a coating layer on the substrate, a second, third, etc. layer may be added by repeating the above steps or by following the other methods described herein (e.g., a cationic cure method). It is also envisioned that a layer based on a different chemistry (e.g., polyacrylate chemistry) may also be included.

The thiol itself may be any thiol known to a skilled artisan. Useful thiols include, but are not limited to, alkyl 3-mercaptopropionates (e.g., pentaerythritol tetra(3-mercaptopropionate) and trimethylolpropane tri(3-mercaptopropionate)), alkythioglycolates ( e.g., butyl thioglycolate and 2-Ethylhexyl thioglycolate), and alkyl thiols (e.g.,_2-ethylhexyl thiol, 1-Butanethiol and 2-methyl-2-propanethiol). Any combination of any of the foregoing thiols (or any other useful thiol known to a skilled artisan) is also envisioned.

The alkene itself may be a monomer or oligomer, or a combination thereof. The alkene should include at least one vinyl group, at least one allyl group, or at least one of each. Useful alkenes include, but are not limited to, diethylene glycol divinyl ether (DEGDVE), triethyleneglycol divinyl ether (TEGDVE), butanediol divinyl ether (BDDVE), pentaerythritol allyl ether (PETAE), triallyl iscocyanurate (TAIC), and tris[4-(vinyloxy)butyl)trimellitate. Any combination of any of the foregoing alkenes (or any other useful alkene known to a skilled artisan) is also envisioned.

The optional photoinitiation system for the thiol-ene cure system includes at least a photoinitiator. The photoinitiator should be either a Norrish type I photoinitiator, a Norrish type II photoinitiator, or a combination thereof. However, any photoinitiator known to be useful with thiol-ene curing may be used.

The optional photoinitiation system for the thiol-ene cure system may optionally include a photosensitizer, which may be any useful photosensitizer known to a skilled artisan.

Other useful additives known to those of skill in the art may also be included in the thiol-ene cured resin system of the present invention. One such useful additive is a gloss adjuster. The invention may further include comprising a catalyst, a stabilizer, a modifier, a processing aid, an internal and external lubricant package, an ultraviolet absorber, tint, pigments, other specialty additives, or any combination thereof. Additional wear resistant additives such as aluminum oxide (Al₂O₃) particles, crystalline classes of silicon carbide, hard plastics, reinforced polymers, nylon, organics, or any combination thereof may also be included in the invention

The thiol-ene cure resin system may be cured through the application of light. UV light is preferred, especially UV light produced by a UV LED light or by a UV arc lamp. In some instances, the UV light may have germicidal properties. In general, the UV light should have a wavelength of from about 160 nm to about 450 nm. It is preferred that the UV light be applied for a time period of about 1 second to about 180 seconds.

### Abrasion Resistant Material

Both the cationic cure and thiol-ene cure systems of the present invention require the presence of at least one abrasion resistant material, which is preferably a diamond material. The diamond material may be of synthetic or natural origin and may be in any form known to a skilled artisan. Useful forms include, but are not limited to, diamond particles, diamond dust, diamond shards, diamond fragments, and whole diamonds. Any combination of any of the foregoing diamond forms (or any other useful forms known to a skilled artisan) is also envisioned.

The diamond material may be of any useful size. In some instances, the diamond material may be a nanoparticle measured on the nanoscale. For example, the diamond nanoparticle may have an average diameter of from about 0.1 nm to about 1,000 nm; preferably from about 0.2 nm to about 900 nm; more preferably from about 0.5 nm to about 800 nm; even more preferably from about 1 nm to about 600 nm; yet even more preferably from about 2 nm to about 500 nm; and most preferably from about 10 nm to about 500 nm, from about 20 nm to about 500 nm, from about 20 nm to about 200 nm, from about 25 nm to about 250 nm, from about 35 nm to about 175 nm, from about 50 nm to about 150 nm, from about 75 nm to about 125 nm or from about 20 nm to about 40 nm. It should be noted that the term "nanoparticle" refers to size measurements only and not to the form of the diamond material. For example, it is possible that diamond particles are measured as being nanoparticles; however, it is also possible that diamond dust, diamond shards, diamond fragments and even whole diamonds are measured as being nanoparticles. Additionally, any other material used as abrasion resistant material may also have the average diameters described above.

In other instances, the diamond material may be a microparticle measured on the microscale. Fore example, the diamond microparticle may have an average diameter of from about 0.01 µm to about 100 µm; preferably from about 0.1 µm to about 75 µm; more preferably from about 0.5 µm to about 100 µm, from about 0.5 µm to about 50 µm, or from about 6 µm to about 30 µm; even more preferably from about 0.75 µm to about 25 µm; yet even more preferably from about 1 µm to about 10 µm; and most preferably from about 1 µm to about 5 µm, from about 5 µm to about 10 µm, from about 2.5 µm to about 7.5 µm, or from about 6 µm to about 10 µm. It should be noted that the term "microparticle" refers to size measurements only and not to the form of the diamond material. For example, it is possible that diamond particles are measured as being microparticles; however, it is also possible that diamond dust, diamond shards, diamond fragments and even whole diamonds are measured as being microparticles. Additionally, any other material used as abrasion resistant material may also have the average diameters described above.

In some embodiments of the invention, a first abrasion resistant material is measured on the nanoscale while a second abrasion resistant material is measured on the microscale. In other embodiments, both the first and second abrasion resistant materials are measured on either the nanoscale or the microscale. Either the first or second abrasion resistant material (or both) may be diamond material. In other embodiments, there may be a third abrasion resistant material; the third abrasion resistant material may be measured on the same scale as either the first or the second abrasion resistant material. The third abrasion resistant material may also be diamond.

Other materials useful as abrasion resistant materials include aluminum oxide (also known as corundum), feldspar, spinels, topaz, or quartz, or combinations of the foregoing. Other useful materials include any material that has a hardness of at least about a 6 or higher on the Mohs hardness scale.

### Coatings and Coating Layers

In some instances, the composition formed by the combination of the various ingredients to form either the cationic cured resin system or the thiol-ene cured system may be considered to be a coating composition.

The coating composition may be layered on substrates by any of the above-described methods, as well as any other method known to those of skill in the art. In general, each coating layer should have an average thickness of from about 0.1 µm to about 500 µm; preferably from about 0.5 µm to about 250 µm; more preferably from about 1 µm to about 150 µm; yet even more preferably from about 2 µm to about 100 µm; and most preferably from about 2 µm to about 50 µm, from about 4 µm to about 40 µm, or from about 6 µm to about 20 µm.

The amount of abrasion resistant material in a coating layer may be measured by weight of the abrasion resistant material compared to the weight of the coating layer, i.e., a wt. %. In general, it is preferred that the abrasion resistant material be present in a coating layer in an amount of less than 12.0 wt.%, preferably less than 10.0 wt.%, even more preferably less than 5.50 wt. %, based on the weight of the coating layer. In other instances, it is preferred that the abrasion resistant material be present in a coating layer in an amount of at least 1.50 wt. %, preferably at least 2.0 wt.%, even more preferably at least 6.0 wt.%, based on the weight of the coating layer. In order to determine wt. %, a sample size of a cured coating layer may be tested. The sample may be of any size, e.g., 1 cm², 10 cm², 100 cm², or any other size useful for testing. The thickness of the coating layer sample being tested should, statistically, have the same average thickness as the rest of the coating layer.

In some embodiments, the abrasion resistant material may protrude past the top surface of a layer. For example, the abrasion resistant material may protrude past the top surface of a layer by about 1-50% of the average coating thickness of the layer. In some instances, the ratio of the average coating thickness of the layer to the average diameter of the abrasion resistant material may be in the range of from about 0.6:1 to about 2:1.

In other embodiments, the abrasion resistant material may be submerged beneath the top surface of a layer. For example, the abrasion resistant material may be submerged beneath the top surface of a layer by about 1-50% of the average coating thickness of the layer. In some instances, the abrasion resistant material may be submerged beneath the top surface of a layer by about 1-25% of the average coating thickness of the layer, with the abrasion resistant material being vertically offset from the bottom surface of the layer by about 1-25% of the average coating thickness of the layer. In some instances of the present invention, the ratio of the average coating thickness of a layer to the average diameter of the abrasion resistant material in that layer may be in the range of from about 0.6:1 to about 2:1.

Moreover, it is envisioned that the abrasion resistant material may be spread at least somewhat uniformly throughout the coating layer, such that each piece of abrasion resistant material is, on average, separated from another piece of the abrasion resistant material by an average of from about 20 µm to about 75 µm.

### Substrates and Floor Coverings

The substrate coated with either of the above-described systems may be any substrate known to be useful. Examples include, but are not limited to, tile (e.g., vinyl tile, ceramic tile, porcelain tile, wood tile); linoleum; laminate; engineered wood; wood (e.g., ash, birch, cherry, exotic, hickory, maple, oak, pecan, walnut); cork; stone; bamboo; and vinyl sheet. Any combination of any of the foregoing substrates (or any other useful substrate known to a skilled artisan) is also envisioned.

It is envisioned that various types of floor coverings can be produced, either by any of the above-described methods or by other methods known to those of skill in the art. In particular, the floor covering should include a substrate that has been coated with at least one coating layer as described above.

In some embodiments, the floor covering includes two or more layers. In these embodiments, at least one of the layers should be in accordance with the coating layers described above. For example, a floor covering may include a substrate coated with a cationic cured resin system layer as a base layer, and then further coated with either (i) the same or different cationic cured resin system layer, (ii) with a thiol-ene cured system layer, or (iii) with a blank layer based on different chemistry than as described above, e.g., polyacrylate chemistry. The blank layer may optionally include abrasion resistant material.

In some instances, the thiol-ene cured system layer may be the base layer, which is then further coated with either (i) the same or different thiol-ene cured system layer, (ii) with a cationic cured resin system layer, or (iii) with a blank layer based on different chemistry than as described above, e.g., polyacrylate chemistry. The blank layer may optionally include abrasion resistant material.

In other instances, the base layer may be a blank layer based on different chemistry than as described above, e.g., polyacrylate chemistry. On top of the blank base layer may then be at least one coating layer according to the invention as described above.

That is, a floor covering may include a substrate with a single coating layer or with multiple coating layers. Regardless of the number of, or order of, the coating layers on the substrate, at least one of the coating layers must be according to the invention as described above. The additional coating layer(s) may or may not be according to the invention as described above.

In some embodiments of the floor covering that includes multiple coating layers, at least one of the layers may be a print layer which includes decorative or informative designs, pictures, symbols, characters or words. In other embodiments of the floor covering that includes multiple layers, at least one of the layers may be a wear layer that is designed to protect the floor covering by wearing away with use.

### Examples

The invention is further illustrated by the following cationic-cured Examples. These Examples should not be construed as limiting the invention in any way and are provided merely to clarify the invention and exemplify some embodiments of the invention.

Polyols - Polyols used in accordance with the present invention may be any now known or later discovered; exemplary polyols may be prepared from the components listed in Table 1A below. While the exemplary polyols may be prepared (from the below listed components) according to any method known to those skilled in the art, the exemplary polyols were prepared using a LabMax program: (1) mix the listed ingredients together; (2) heat the mixture to about 80°C; (3) charge the heated mixture; (4) ramp up the temperature of the charged, heated mixture to about 150°C over the course of about two hours; (5) ramp up the temperature of the charged, heated mixture to about 230°C over the course of about twelve hours; and (6) hold the temperature of the charged, heated mixture at about 230°C for about four hours.

**Table 1A**

| | Polyol Example Number^{∗} (prepared by the above method, using the below components) (all amounts in grams, g) | | | | | | | | |
|---|---|---|---|---|---|---|---|---|---|
| | 1 | 2 | 3 | 4 | 5 | 6 | 7 | 8 | 9 |
| Sebacic Acid | 639.18 | 648.31 | 663.10 | 672.94 | - | - | - | - | - |
| Succinic Acid | - | - | - | - | 539.50 | 551.69 | 557.92 | 570.97 | - |
| 1,3-Propanediol | 360.72 | 291.48 | 336.80 | 264.57 | 460.40 | 360.65 | 441.99 | 338.32 | - |
| Glycerine | - | 60.10 | - | 62.39 | - | 87.56 | - | 90.61 | - |
| ^{∗∗}Fascat^{®} 4100 | 0.10 | 0.10 | 0.10 | 0.10 | 0.10 | 0.10 | 0.10 | 0.10 | - |
| 1,6 Hexanediol | - | - | - | - | - | - | - | - | 889.00 |
| Phthalic Anhydride | - | - | - | - | - | - | - | - | 234.50 |
| Trimellitic Anhydride | - | - | - | - | - | - | - | - | 376.50 |
| Phosphorous Acid | - | - | - | - | - | - | - | - | 0.55 |
| Triethyl Phosphite (TEP) | - | - | - | - | - | - | - | - | 15.01 |
| Total: | 1000.00 | 999.99 | 1000.00 | 1000.00 | 1000.00 | 1000.00 | 1000.01 | 1000.00 | 1515.56 |

| | | | | | | | | | |
|---|---|---|---|---|---|---|---|---|---|
| ^{∗}Polyol Example No. 1 is also known by its tradename of DTBioPE03302008-1; Polyol Example #2 is also known by its tradename of DTBioPE03302008-2; etc. Polyol Example #9 is also known by its tradename of P979. ^{∗∗}Fascat^{®} 4100 = butylstannoic acid | | | | | | | | | |

Polyol Example Nos. 1-5 and 9 were each tested and discovered to have the following properties, as shown in Table 1B:

**Table 1B**

| | Polyol Example Numbers | | | | | |
|---|---|---|---|---|---|---|
| | 1 | 2 | 3 | 4 | 5 | 9 |
| Acid No. (AN) | 0.28 | 0.28 | 0.561 | 2.78 | 0.58723 | 5.83 |
| Hydroxyl No. (OH) | 178.78 | 73.21 | 130.32 | 0 | 172.91 | 221.75 |
| Viscosity^{∗} (cP): | 80.5 | 389 | 142 | n/a | 2315 | 5580 5500 |

| | | | | | | |
|---|---|---|---|---|---|---|
| ^{∗}Viscosity test conditions: Polyol Example 1: 10 g, 21 spindle, 70°C, 100 RPM, 15.9% torque Polyol Example 2: 10 g, 21 spindle, 70°C, 100 RPM, 77.7% torque Polyol Example 3: 10 g, 21 spindle, 70°C, 100 RPM, 28.4% torque Polyol Example 5: 8.11 g, 24.8°C, 10 RPM, 46.3% torque Polyol Example 9, Trial 1: 21 spindle, 130.1°F, 2.5 RPM, 27.7% torque Polyol Example 9, Trial 2: 21 spindle, 130.1°F, 4.5 RPM, 49.4% torque | | | | | | |

Coatings - Twenty coatings in accordance with the invention were prepared, with the compositions of each being listed in Tables 2A-2D below. As defined in the below, Ingredients A1 and A2, e.g., are used either in combination with each other or in the alternative to each other and may be referred to generally as Ingredient A, etc. Therefore, the term "Ingredient A" (or "Ingredient B", etc.) should be used in conjunction with the appropriate Table to determine which of Ingredient A1 and/or A2 (or Ingredient B1, B2, and/or B3, etc.) is present.

The method used to prepare the coatings was as follows: (1) mix together Ingredients A, B, C, and D (if present) to form mixture; (2) mix the mixture at about 130°F until at least Ingredient D (if present) is completely or substantially dissolved; (3) cool mixture to about room temperature, i.e., about 20-25°C; (4) slowly add ingredients E and F (if present) to mixture while stirring; (5) stir mixture for at least about five minutes; (6) slowly add Ingredient H (if present) to mixture; and (6) stir mixture at high RPM (i.e., approximately 2000 RPM) for at least about fifteen minutes. Viscosities of the coatings should be measured at about room temperature, i.e., about 20-25°C.

**Table 2A**

| | | | Coating Example Number^{∗} (all amounts in grams, g) | | | | | |
|---|---|---|---|---|---|---|---|---|
| Ingredient (function) | | Chemical Name | 1 | 2 | 3 | 4 | 6 | 8 |
| A1 | Polyol Ex. 5 (reactant) | Polyol | 12.50 | 12.50 | 12.50 | 12.50 | 12.50 | 12.50 |
| B1 | Syna-Epoxy 21 (reactant) | 3,4-epoxycyclohexylmethyl 3,4-epoxycyclohexanecarboxylate (CAS No. 2386-87-0) | 50.00 | 50.00 | 50.00 | 50.00 | 50.00 | 50.00 |
| c | Tego Wet 270 (surfactant) | Pol yethersiloxane | 0.193 | 0.193 | 0.193 | 0.193 | 0.193 | 0.193 |
| D1 | Genocure ITX (photoinitiator) | Isopropyl Thioxanthone | 0.313 | - | 0.313 | - | - | - |
| D2 | Genocure DETX (photoinitiator) | 2,4-Diethylthioxanthone | - | 0.313 | - | 0.313 | 0.313 | 0.313 |
| E2 | Syna-PI6976 (photoinitiator) | Mixed type triarylsulfonium hexafluoroantimonate salts (CAS Nos. 89452-37-9, 71449-78-0, 108-32-7) | 3.75 | 3.75 | 3.75 | 3.75 | 3.75 | 3.75 |
| F | Disperbyk 2008 (dispersing agent) | Acrylic Block-copolymer | - | - | 0.156 | 0.156 | 0.156 | 0.156 |
| H2 | SCMD-B 15-20 (abrasive agent) | Diamond | - | - | 3.13 | 3.13 | - | 1.56 |
| H3 | CA15 (abrasive agent) | Aluminum Oxide | - | - | - | - | 3.13 | 1.56 |
| | Total: | | 66.76 | 66.76 | 70.04 | 70.04 | 70.04 | 70.03 |

| | | | | | | | | |
|---|---|---|---|---|---|---|---|---|
| ^{∗}Coating Example No. 1 is also known as DTD10C09042017-1; Coating Example No. 2 is also known as DTD10C09042017-2; etc. | | | | | | | | |

**Table 2B**

| | | | Coating Example Number^{∗} (all amounts in grams, g) | | | | |
|---|---|---|---|---|---|---|---|
| Ingredient (function) | | Chemical Name | 10 | 12 | 13 | 15 | 19 |
| A1 | Polyol Ex. 5 (reactant) | Polyol | 12.5 | 12.5 | 12.5 | 12.5 | - |
| A2 | Polyol Ex. 9 | Polyol | - | - | - | - | 12.5 |
| B1 | Syna-Epoxy 21 (reactant) | 3,4-epoxycyclohexylmethyl 3,4-epoxycyclohexanecarboxylate (CAS No. 2386-87-0) | 10.00 | 10.00 | 10.00 | 10.00 | 10.00 |
| B2 | Syna-Epoxy 28 (reactant) | Bis((3,4-epoxycyclohexyl)methyl)adipate (Cas No. 3130-19-6) | 20.00 | 20.00 | 20.00 | 20.00 | 20.00 |
| B3 | Syna-Epoxy 06E (reactant) | 3,4-epoxycyclohexylmethyl 3,4-epoxycyclohexanecarboxylate (CAS No. 2386-87-0) | 20.00 | 20.00 | 20.00 | 20.00 | 20.00 |
| c | Tego Wet 270 (surfactant) | Pol yethersiloxane | 0.193 | 0.193 | 0.193 | 0.193 | 0.193 |
| D2 | Genocure DETX (photoinitiator) | 2,4-Diethylthioxanthone | 0.313 | 0.313 | 0.313 | - | 0.625 |
| E2 | Syna-PI6976 (photoinitiator) | Mixed type triarylsulfonium hexafluoroantimonate salts | 3.75 | - | 3.75 | 3.75 | 3.75 |
| | | (CAS Nos. 89452-37-9, 71449-78-0, 108-32-7) | | | | | |
| E3 | Syna-PI6992 (photoinitiator) | Mixed type triarylsulfonium hexafluoro phosphate salts (Cas Nos. 68156-13-8, 74227-35-3, 103-32-7) | - | 3.75 | - | - | - |
| Fl | Disperbyk 2008 (dispersing agent) | Acrylic Block-copolymer | 0.156 | 0.156 | 0.344 | 0.344 | 0.344 |
| HI | Acematt 3600 (matting agent) | Silica | - | - | 3.75 | 3.75 | 3.75 |
| H2 | SCMD-B 15-20 (abrasive agent) | Diamond | 3.13 | 3.13 | 3.13 | 3.13 | 3.13 |
| | Total: | | 70.04 | 70.04 | 73.97 | 73.66 | 74.29 |

| | | | | | | | |
|---|---|---|---|---|---|---|---|
| ^{∗}Coating Example No. 10 is also known as DTD10C09042017-10; ^{∗}Coating Example No. 12 is also known as DTD10C09042017-12; etc. | | | | | | | |

**Table 2C**

| | | | Coating Example Number^{∗} (all amounts in grams, g) | | | | | |
|---|---|---|---|---|---|---|---|---|
| Ingredient (function) | | Chemical Name | 5 | 7 | 9 | 11 | 14 | 16 |
| A1 | Polyol Ex. 5 (reactant) | Polyol | 12.50 | 12.50 | 12.50 | 12.50 | 12.50 | 12.50 |
| B1 | Syna-Epoxy 21 (reactant) | 3,4-epoxycyclohexylmethyl 3,4-epoxycyclohexanecarboxylate (CAS No. 2386-87-0) | 50.00 | 50.00 | 10.00 | 10.00 | 10.00 | 10.00 |
| B2 | Syna-Epoxy 28 (reactant) | Bis((3,4-epoxycyclohexyl)methyl)adipate (Cas No. 3130-19-6) | - | - | 20.00 | 20.00 | 20.00 | 20.00 |
| B3 | Syna-Epoxy 06E (reactant) | 3,4-epoxycyclohexylmethyl 3,4-epoxycyclohexanecarboxylate (CAS No. 2386-87-0) | - | - | 20.00 | 20.00 | 20.00 | 20.00 |
| C | Tego Wet 270 (surfactant) | Pol yethersiloxane | 0.193 | 0.193 | 0.193 | 0.193 | 0.193 | 0.193 |
| D1 | Genocure ITX (photoinitiator) | Isopropyl Thioxanthone | 0.313 | 0.313 | 0.313 | - | - | - |
| D2 | Genocure DETX (photoinitiator) | 2,4-Diethylthioxanthone | - | - | - | - | 0.625 | - |
| D3 | Speedcure CPTX (photoinitiator) | 1-chloro-4-propoxythioxanthone | - | - | - | 0.313 | - | - |
| E2 | Syna-PI6976 (photoinitiator) | Mixed type triarylsulfonium hexafluoroantimonate salts (CAS Nos. 89452-37-9, 71449-78-0, 108-32-7) | 3.75 | 3.75 | 3.75 | 3.75 | 3.75 | - |
| E3 | Syna-PI6992 (photoinitiator) | Mixed type triarylsulfonium hexafluoro phosphate salts (Cas Nos. 68156-13-8, 74227-35-3, 103-32-7) | - | - | - | - | - | 3.75 |
| F | Disperbyk 2008 (dispersing agent) | Acrylic Block-copolymer | 0.156 | 0.156 | 0.156 | 0.156 | 0.344 | 0.344 |
| H1 | Acematt 3600 (matting agent) | Silica | - | - | - | - | 0.375 | 0.375 |
| H2 | SCMD-B 15-20 (abrasive agent) | Diamond | - | 1.56 | 3.13 | 3.13 | 3.13 | 3.13 |
| H3 | CA15 (abrasive agent) | Aluminum Oxide | 3.13 | 1.56 | - | - | - | - |
| | Total: | | 70.04 | 70.04 | 70.04 | 70.04 | 74.29 | 73.66 |

| | | | | | | | | |
|---|---|---|---|---|---|---|---|---|
| ^{∗}Coating Example No. 5 is also known as DTD10C09042017-5; Coating Example No. 7 is also known as DTD10C09042017-7; etc. | | | | | | | | |

**Table 2D**

| | | | Coating Example Number^{∗} (all amounts in grams, g) | | |
|---|---|---|---|---|---|
| Ingredient (function) | | Chemical Name | 17 | 18 | 20 |
| A2 | Polyol Ex. 9 (reactant) | Polyol | 12.50 | 12.50 | 12.50 |
| B1 | Syna-Epoxy 21 (reactant) | 3,4-epoxycyclohexylmethyl 3,4-epoxycyclohexanecarboxylate (CAS No. 2386-87-0) | 50.00 | 50.00 | 10.00 |
| B2 | Syna-Epoxy 28 (reactant) | Bis((3,4-epoxycyclohexyl)methyl)adipate (Cas No. 3130-19-6) | - | - | 20.00 |
| B3 | Syna-Epoxy 06E (reactant) | 3,4-epoxycyclohexylmethyl 3,4-epoxycyclohexanecarboxylate (CAS No. 2386-87-0) | - | - | 20.00 |
| C | Tego Wet 270 (surfactant) | Pol yethersiloxane | 0.193 | 0.193 | 0.193 |
| D2 | Genocure DETX (photoinitiator) | 2,4-Diethylthioxanthone | 0.313 | 0.313 | - |
| E2 | Syna-PI6976 (photoinitiator) | Mixed type triarylsulfonium hexafluoroantimonate salts (CAS Nos. 89452-37-9, 71449-78-0, 108-32-7) | 3.75 | 3.75 | 3.75 |
| F | Disperbyk 2008 (dispersing agent) | Acrylic Block-copolymer | - | 0.156 | 0.344 |
| HI | Acematt 3600 (matting agent) | Silica | - | - | 3.75 |
| H2 | SCMD-B 15-20 (abrasive agent) | Diamond | - | 3.13 | 3.13 |
| | Total: | | 66.76 | 70.04 | 73.66 |

| | | | | | |
|---|---|---|---|---|---|
| ^{∗}Coating Example No. 17 is also known as DTD10C09042017-17; Coating Example No. 18 is also known as DTD10C09042017-18; etc. | | | | | |

Application - After preparation of the twenty coatings examples, each coating example was applied to two substantially identical substrates, in particular, to Medintech FPH 5300271, a homogenous vinyl flooring; the coatings were applied using a draw-down rod #8 at about 30°C. This resulted in twenty sets of coated substrates, each set including two identical samples, i.e., an "A" sample and a "B" sample. The coated substrates were then cured.

Curing - The A samples were cured using a first method, and the B samples were cured using a second method (with a caveat described below); with each method having several variables. The first method ("Arc Lamp Cure") required both a precure and final cure using an arc lamp with a regular mercury bulb, resulting in Sample Nos. 1A-20A. Sample Nos. 1B-12B, 14B, 16B-18B, and 20B were prepared using a second method ("Baldwin LED Cure") which required only a final cure using an LED 385 nm light. Sample Nos. 13B, 15B, and 19B underwent the same precure as the A samples and then underwent the same final cure as the other B samples.

The time between precure (if performed) and final cure was approximately six seconds.

Precure - The precure was conducted using a blue AETEK^{®} arc lamp having the following parameters (measured by EIT UV Power Puck) and under the following conditions, shown in Table 3:

**Table 3**

| Parameter/Condition | Value | |
|---|---|---|
| N₂ or Air | Air | |
| No. of Passes | 1 | |
| Line Speed | 49 feet/minute | |
| Lamp Power | 25% | |

| | Lamp Height Above Coated Substrate | 10 inches |
|---|---|---|
| UVA | Energy Density | 0.114 J/cm² |
| | Irradiance | 0.225 W/cm² |
| UVB | Energy Density | 0.119 J/cm² |
| | Irradiance | 0.225 W/cm² |
| UVC | Energy Density | 0.020 J/cm² |
| | Irradiance | 0.038 W/cm² |
| UVV | Energy Density | 0.056 J/cm² |
| | Irradiance | 0.130 w/cm² |

| | | |
|---|---|---|
| (Precuring was conducted on Sample Nos. 1A-20A, 13B, 15B, and 19B.) | | |

Arc Lamp Cure - Under the Arc Lamp Cure method, the final cure was conducted using a green AETEK^{®} arc lamp having the following parameters (measured by EIT UV Power Puck) and under the following conditions, shown in Table 4A:

**Table 4A**

| Parameter/Condition | Value | |
|---|---|---|
| N₂ or Air | Air | |
| No. of Passes | 1 | |
| Line Speed | 23 feet/minute | |
| Lamp Power | 2×31,2×50 | |
| Lamp Height Above Coated Substrate | 9 inches | |
| UVA | Energy Density | 0.923 J/cm² |
| | Irradiance | 0.278 W/cm² |
| UVB | Energy Density | 0.930 J/cm² |
| | Irradiance | 0.270 W/cm² |
| UVC | Energy Density | 0.138 J/cm² |
| | Irradiance | 0.038 W/cm² |
| UVV | Energy Density | 0.536 J/cm² |
| | Irradiance | 0.177 w/cm² |

| | | |
|---|---|---|
| (Arc Lamp final cure was conducted on Sample Nos. 1A-20A.) | | |

Baldwin LED Cure - Under the Baldwin LED Cure method, the final cure was conducted using a Baldwin 385 nm LED lamp having the following parameters (measured by EIT UV Power Map) and under the following conditions, shown in Table 4B:

**Table 4B**

| Parameter/Condition | Value | |
|---|---|---|
| N₂ or Air | Air | |
| No. of Passes | 1 | |
| Line Speed | 20 feet/minute | |
| Lamp Power | 100% | |
| Lamp Height Above Coated Substrate | 0.5 inches | |
| Wavelength | 385 nm | |
| UVA | Energy Density | 1.006 J/cm² |
| | Irradiance | 3.734 W/cm² |
| UVB | Energy Density | 0.029 J/cm² |
| | Irradiance | 0.068 W/cm² |
| UVC | Energy Density | 0.027 J/cm² |
| | Irradiance | 0.890 W/cm² |
| UVV | Energy Density | 2.239 J/cm² |
| | Irradiance | 8.316 w/cm² |

| | | |
|---|---|---|
| (Baldwin LED final cure was conducted on Sample Nos. 1B-20B.) | | |

The above steps resulted in forty different cured samples, i.e., Cured Sample Nos. 1A-20A and 1B-20B. For the avoidance of doubt, "Cured Sample No. 1A" refers to Coating Example No. 1 that was applied to the substrate and then underwent the Arc Lamp Cure process (both pre cure and final cure), etc.; "Cured Sample No. 1B" refers to Coating Example No. 1 that was applied to the substrate and then underwent the Baldwin LED Cure process, etc. As described above, all "A" samples underwent the precure and final cure Arc Lamp Cure processes only; all "B" samples underwent the Baldwin LED Cure process with the caveat that Cured Sample Nos. 13B, 15B, and 19B also underwent the precure process from the Arc Lamp Cure process.

The following Cured Samples were then tested at about 30°C using a gloss meter at a 60° angle to obtain an initial gloss value: Cured Samples 1A-4A, 6A, 8A, 10A, 12A, 13A, 15A, and 19A; and similarly, Cured Samples 1B-4B, 6B, 8B, 10B, 12B, 13B, 15B, and 19B. The initial gloss values, along with viscosity data and temperature data recorded during the curing processes, are provided in Table 5:

**Table 5**

| | | Substrate Temperature, °F | | | | | |
|---|---|---|---|---|---|---|---|
| Cured Sample No. | Viscosity^{∗} | Precure start | Precure finish | LED Cure start | LED Cure finish | Arc Lamp finish | Initial Gloss^{∗∗} |
| 1A | 1150 | 88 | 95 | - | - | 133 | 78 |
| 2A | 1100 | 88 | 97 | - | - | 128 | 78 |
| 3A | 1150 | 89 | 99 | - | - | 131 | 61 |
| 4A | 1150 | 89 | 97 | - | - | 129 | 60 |
| 5A | 1100 | 89 | 97 | - | - | 132 | 59 |
| 6A | 1100 | 88 | 97 | - | - | 129 | 62 |
| 10A | 1250 | 89 | 97 | - | - | 130 | 65 |
| 12A | 1100 | 89 | 97 | - | - | 133 | 58 |
| 13A | 2150 | 88 | 97 | - | - | 135 | 66 |
| 15A | 2150 | 89 | 97 | - | - | 135 | 65 |
| 19A | 5100 | 88 | 98 | - | - | 135 | 76 |
| 1B | 1150 | - | - | 73 | 88 | - | 75 |
| 2B | 1100 | - | - | 73 | 88 | - | 74 |
| 3B | 1150 | - | - | 73 | 88 | - | 62 |
| 4B | 1150 | - | - | 72 | 87 | - | 62 |
| 5B | 1100 | - | - | 73 | 88 | - | 67 |
| 6B | 1100 | - | - | 73 | 88 | - | 68 |
| 10B | 1250 | - | - | 74 | 88 | - | 69 |
| 12B | 1100 | - | - | 74 | 88 | - | 65 |
| 13B | 2150 | 89 | 99 | 90 | 101 | - | 61 |
| 15B | 2150 | 90 | 100 | 92 | 102 | - | 58 |
| 19B | 5100 | 89 | 101 | 91 | 103 | - | 63 |

| | | | | | | | |
|---|---|---|---|---|---|---|---|
| ^{∗}Viscosity measured at about 15.5°C, using a #6 Spindel at 100RPM; measured in centipoise, cPs. ^{∗∗}Gloss measured at 60° angle (average profile readings) | | | | | | | |

### Testing

Each of the Cured Samples in Table 5 were then tested for gloss retention after undergoing an abrasion test. The testing used a GARDNER^{®} abrasion tester; each Cured Sample was abraded with thirty passes using 100-grit sandpaper under a two pound weight. The gloss of each tested Cured Sample was then measured using the aforementioned gloss meter at a 60° angle; the results are listed in Table 6, below, wherein the % of gloss retained was calculated by: gloss value after test / initial gloss value ^{∗} 100.

**Table 6**

| Cured Sample No. | % Gloss Retained | | Cured Sample No. | % Gloss Retained |
|---|---|---|---|---|
| 1A | 31.4 | | 1B | 38.8 |
| 2A | 16.3 | | 2B | 36.7 |
| 3A | 79.5 | | 3B | 82.6 |
| 4A | 84.8 | | 4B | 83.4 |
| 6A | 64.0 | | 6B | 48.2 |
| 7A | 78.6 | | 7B | 78.0 |
| 10A | 85.5 | | 10B | 82.8 |
| 12A | 80.1 | | 12B | 80.0 |
| 13A | 65.4 | | 13B | 89.5 |
| 15A | 73.0 | | 15B | 77.9 |
| 19A | 80.5 | | 19B | 79.0 |

The foregoing illustrates some of the possibilities for practicing the invention. Therefore, although specific example embodiments have been described, it will be evident that various modifications and changes may be made to these embodiments without departing from the broader scope of the invention; many other embodiments are possible within the scope of the invention. For example, although the coatings and coating layers, as shown and described herein as being used in conjunction with substrates, which are related to floor coverings, it will be appreciated by those of skill in the art that the, e.g., coatings and coating layers could be used in conjunction with substrates which are related to other types of coverings, such as for walls, countertops, automobile structures, furniture surfaces, protective case surfaces, and the like, and still exhibit the same added abrasion resistance properties.

Accordingly, the specification is to be regarded in an illustrative rather than a restrictive sense. Other embodiments may be utilized and derived therefrom, such that structural and logical substitutions and changes may be made without departing from the scope of this disclosure. This Description, therefore, is not to be taken in a limiting sense, and the scope of various embodiments is defined only by the appended claims, along with the full range of equivalents to which such claims are entitled.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been described herein, it should be appreciated that any arrangement calculated to achieve the same purpose may be substituted for the specific embodiments shown. This disclosure is intended to cover any and all adaptations or variations of various embodiments. Combinations of any of the above-described embodiments, and other embodiments not specifically described herein, may be used and are fully contemplated herein. For example, if a specific photoinitiator is described as being useful in the described cationic cure system, it will be understood by those of skill in the art that the photoinitiator may also be envisioned as being useful in the described thiol-ene cure system, even if such description is not specifically provided herein. The same holds true for, e.g., a specific photoinitiator described as useful in the described thiol-ene cure system but not described as such in the described cationic cure system.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus the following claims are hereby incorporated into the above Description of the invention, with each claim standing on its own as a separate example embodiment.

The term "comprising" as may be used in the following claims is an open-ended transitional term that is intended to include additional elements not specifically recited in the claims. The term "consisting essentially of as may be used in the following claims is a partially closed transitional phrase and is intended to include the recited elements plus any unspecified elements that do not materially affect the basic and novel characteristics of the claims. The term "consisting of as may be used in the following claims is intended to indicate that the claims are restricted to the recited elements.

## Claims

1. A cationic cured resin system, comprising:
A. at least one resin;
B. at least one polyol;
C. a photoinitiation system;
D. at least one abrasion resistant material comprising diamond material and at least a second abrasion resistant material comprising at least one selected from the group consisting of (i) a second diamond material, (ii) a non-diamond material having a Mohs hardness value of at least 6,
wherein the at least one abrasion resistant material comprising diamond material is a nanoparticle and the second abrasion resistant material is a microparticle or vice versa; and optionally
E. at least one dispersing agent.

2. The cationic cured resin system of claim 1, wherein the at least one resin is selected from the group consisting of vinyl ether resins, epoxy resins, and combinations thereof.

3. The cationic cured resin system of claim 2, wherein the vinyl ether resin is selected from the group consisting of 1,4-butanediol divinyl ether; 1,3-propanediol divinyl ether; 1,6-hexanediol divinyl ether; 1,4-cyclohexanedimethylol divinyl ether;diethyleneglycol divinyl ether; triethyleneglycol divinyl ether; n-butyl vinyl ether; tert-butyl vinyl ether; cyclohexyl vinyl ether; dodecyl vinyl ether; octadecyl vinyl ether; trimethylolpropane diallyl ether; allyl pentaerythritol; trimethylolpropane monoallyl ether; and combinations thereof.

4. The cationic cured resin system of claim 2, wherein the epoxy resin is selected from the group consisting of 3,4-epoxycyclohexylmethyl-3,4-epoxycyclohexane carboxylate; bis-(3,4-epoxycyclohexyl) adipate; 3-ethyl-3-hydroxy-methyl-oxetane; 1,4-butanediol diglycidyl ether; 1,6 hexanediol diglycidyl ether; ethylene glycol diglycidyl ether; polypropylene glycol diglycidyl ether; polyglycol diglycidyl ether; propoxylated glycerin triglycidyl ether; monoglycidyl ester of neodecanoic acid; epoxidized soy; epoxidized linseed oil; epoxidized polybutadiene resins; and combinations thereof.

5. The cationic cured resin system of claim 1, wherein the at least one resin is selected from the group consisting of 1,4-butanediol divinyl ether; 1,3-propanediol divinyl ether; 1,6-hexanediol divinyl ether; 1,4-cyclohexanedimethylol divinyl ether;diethyleneglycol divinyl ether; triethyleneglycol divinyl ether; n-butyl vinyl ether; tert-butyl vinyl ether; cyclohexyl vinyl ether; dodecyl vinyl ether; octadecyl vinyl ether; trimethylolpropane diallyl ether; allyl pentaerythritol; trimethylolpropane monoallyl ether; 3,4-epoxycyclohexylmethyl-3,4-epoxycyclohexane carboxylate; bis- (3,4-epoxycyclohexyl) adipate; 3-ethyl-3-hydroxymethyl-oxetane; 1,4-butanediol diglycidyl ether; 1,6 hexanediol diglycidyl ether; ethylene glycol diglycidyl ether; polypropylene glycol diglycidyl ether; polyglycol diglycidyl ether; propoxylated glycerin triglycidyl ether; monoglycidyl ester of neodecanoic acid; epoxidized soy; epoxidized linseed oil; epoxidized polybutadiene resins; and combinations thereof.

6. The cationic cured resin system of claim 1, wherein the at least one polyol is selected from the group consisting of diethylene glycol; neopentyl glycol; glycerol; trimethylol propane; polyether polyols; polyester polyols; aliphatic polyester polyols derived from diacids or diols; aromatic polyester polyols derived from diacids or diols; 1,3- propanediol; 1,4-butanediol; 1,6-hexanediol; 1,4-cyclohexanedimethylol; derivatives thereof; and combinations thereof, and optionally, the at least one polyol is selected from the group consisting of:
A. a polyether polyol selected from the group consisting of polytetramethylene ether glycol;
B. a polyester polyol selected from the group consisting of caprolactone diol; caprolactone triol; and combinations thereof; and
C. combinations thereof.

7. The cationic cured resin system of claim 1-6, wherein the photoinitiation system comprises:A. at least one photoinitiator; andB. optionally, at least one photosensitizer and wherein the at least one photoinitiator is a cationic photoinitiator, selected from the group consisting of iodonium salts; sulfonium salts; and combinations thereof.

8. The cationic cured resin system of claim 7, wherein the cationic photoinitiator is selected from the group consisting of:
A. an iodonium salt selected from the group consisting of bis(4-methylphenyl)-hexafluorophosphate-(1)-iodonium;
B. a sulfonium salt selected from the group consisting of
triarylsulfoniumhexafluoroantimonate salts; triarylsulfonium hexafluorophosphate salts; and combinations thereof; and
C. combinations thereof.

9. The cationic cured resin system of claim 7, wherein the at least one photosensitizer is selected from the group consisting of isopropyl thioxanthone; 1-chloro-4-propoxy-thioxanthone; 2,4-diethylthioxanthone; 2-chlorothioxanthone; and combinations thereof.

10. The cationic cured resin system of claim 1-9, wherein the diamond material is selected from the group consisting of diamond particles, diamond dust, diamond shards, diamond fragments, whole diamonds, and combinations thereof.

11. The cationic cured resin system of claim 1-10, wherein the diamond material is a nanoparticle having an average diameter of from about 0.1 nm to about 1,000 nm; preferably from about 0.2 nm to about 900 nm; more preferably from about 0.5 nm to about 800 nm; even more preferably from about 1 nm to about 600 nm; yet even more preferably from about 2 nm to about 500 nm; and most preferably from about 10 nm to about 500 nm, from about 20 nm to about 500 nm, from about 20 nm to about 200 nm, from about 25 nm to about 250 nm, from about 35 nm to about 175 nm, from about 50 nm to about 150 nm, from about 75 nm to about 125 nm or from about 20 nm to about 40 nm; wherein the average diameter is determined according to the method in the description.

12. The cationic cured resin system of claim 1-10, wherein the diamond material is a microparticle having an average diameter of from about 0.01 µιη to about 100 µιη; preferably from about 0.1 µιη to about 75 µιη; more preferably from about 0.5 µιη to about 100 µιη, from about 0.5 µιη to about 50 µιη, or from about 6 µιη to about 30 µιη; even more preferably from about 0.75 µιη to about 25 µιη; yet even more preferably from about 1 µιη to about 10 µιη; and most preferably from about 1 µιη to about 5 µηι, from about 5 µιη to about 10 µιη, from about 2.5 µιη to about 7.5 µιη, or from about 6 µιη to about 10 µιη; wherein the average diameter is determined according to the method in the description.

13. The cationic cured resin system of claim 1-12, wherein the non-diamond material is preferably selected from the group consisting of aluminum oxide, feldspar, a spinel, topaz, quartz and combinations thereof, and (iii) combinations thereof, wherein:
A. the at least one abrasion resistant material comprising diamond material is a nanoparticle having an average diameter of from about 0.1 nm to about 1,000 nm; preferably from about 0.2 nm to about 900 nm; more preferably from about 0.5 nm to about 800 nm; even more preferably from about 1 nm to about 600 nm; yet even more preferably from about 2 nm to about 500 nm; and most preferably from about 10 nm to about 500 nm, from about 20 nm to about 500 nm, from about 20 nm to about 200 nm, from about 25 nm to about 250 nm, from about 35 nm to about 175 nm, from about 50 nm to about 150 nm, from about 75 nm to about 125 nm or from about 20 nm to about 40 nm; and
the second abrasion resistant material is a microparticle having an average diameter of from about 0.01 µιη to about 100 µιη; preferably from about 0.1 µηι to about 75 µιη; more preferably from about 0.5 µιη to about 100 µιη, from about 0.5 µιη to about 50 µιη, or from about 6 µιη to about 30 µιη; even more preferably from about 0.75 µιη to about 25 µιη; yet even more preferably from about 1 µιη to about 10 µιη; and most preferably from about 1 µιη to about 5 µιη, from about 5 µιη to about 10 µιη,from about 2.5 µηι to about 7.5 µιη, or from about 6 µιη to about 10 µιη; or
B. the at least one abrasion resistant material comprising diamond material is a microparticle having an average diameter of from about 0.01 µιη to about 100 µιη; preferably from about 0.1 µιη to about 75 µιη; more preferably from about 0.5 µιη to about 100 µιη, from about 0.5 µιη to about 50 µηι, or from about 6 µιη to about 30 µιη; even more preferably from about 0.75 µιη to about 25 µιη; yet even more preferably from about 1 µηι to about 10 µιη; and most preferably from about 1 µιη to about 5 µηι, from about 5 µιη to about 10 µιη, from about 2.5 µιη to about 7.5 µηι, or from about 6 µιη to about 10 µιη; and
the second abrasion resistant material is a nanoparticle having an average diameter of from about 0.1 nm to about 1,000 nm; preferably from about 0.2 nm to about 900 nm; more preferably from about 0.5 nm to about 800 nm; even more preferably from about 1 nm to about 600 nm; yet even more preferably from about 2 nm to about 500 nm; and most preferably from about 10 nm to about 500 nm, from about 20 nm to about 500 nm, from about 20 nm to about 200 nm, from about 25 nm to about 250 nm, from about 35 nm to about 175 nm, from about 50 nm to about 150 nm, from about 75 nm to about 125 nm or from about 20 nm to about 40 nm; or
optionally wherein the cationic cured resin system further comprises at least a third abrasion resistant material selected from the group consisting of (i) a third diamond material, (ii) a second non-diamond material preferably having a Mohs hardness value of at least 6 and even more preferably selected from the group consisting of aluminum oxide, feldspar, a spinel, topaz, quartz and combinations thereof, wherein the third abrasion resistant material has an average diameter in the range of the at least one abrasion resistant material and/or the second abrasion resistant material; wherein the average diameter is determined according to the method in the description.

14. The cationic cured resin system of claim 13, wherein:
A. the at least one abrasion resistant material comprising diamond material is a nanoparticle having an average diameter of from about 2.0 nm to about 500 nm, and the second abrasion resistant material is a microparticle having an average diameter of from about 0.5 µιη to about 100 µιη; or
B. the at least one abrasion resistant material comprising diamond material is a microparticle having an average diameter of from about 0.5 µιη to about 100 µηι, and the second abrasion resistant material is a nanoparticle having an average diameter of from about 2.0 nm to about 500 nm;
optionally, wherein the third abrasion resistant material has an average diameter in the range of the at least one abrasion resistant material and/or the second abrasion resistant material; wherein the average diameter is determined according to the method in the description.

15. The cationic cured resin system of claim 13, wherein:
A. the at least one abrasion resistant material comprising diamond material is a nanoparticle having an average diameter of from about 20 nm to about 200 nm and the second abrasion resistant material is a microparticle having an average diameter of from about 6 µιη to about 30 µιη; or
B. the at least one abrasion resistant material comprising diamond material is a microparticle having an average diameter of from about 6 µιη to about 30 µιη, and the second abrasion resistant material is a nanoparticle having an average diameter of from about 20 nm to about 200 nm;
optionally, wherein the third abrasion resistant material has an average diameter in the range of the at least one abrasion resistant material and/or the second abrasion resistant material; wherein the average diameter is determined according to the method in the description.

## Patentansprüche

1. Kationisches gehärtetes Harzsystem, das Folgendes umfasst:
A. mindestens ein Harz;
B. mindestens ein Polyol;
C. ein Photoinitiationssystem;
D. mindestens ein abriebfestes Material, das Diamantmaterial umfasst, und mindestens ein zweites abriebfestes Material, das mindestens eines umfasst, das aus der Gruppe ausgewählt ist, die aus (i) einem zweiten Diamantmaterial, (ii) einem Nicht-Diamantmaterial, das einen Mohs-Härtewert von mindestens 6 aufweist, besteht,
wobei das mindestens eine abriebfeste Material, das Diamantmaterial umfasst, ein Nanopartikel ist und das zweite abriebfeste Material ein Mikropartikel ist oder umgekehrt; und optional
E. mindestens ein Dispergiermittel.

2. Kationisches gehärtetes Harzsystem nach Anspruch 1, wobei das mindestens eine Harz aus der Gruppe ausgewählt ist, die aus Vinyletherharzen, Epoxidharzen und Kombinationen davon besteht.

3. Kationisches gehärtetes Harzsystem nach Anspruch 2, wobei das Vinyletherharz aus der Gruppe ausgewählt ist, die aus Folgenden besteht: 1,4-Butandioldivinylether; 1,3-Propandioldivinylether; 1,6-Hexandioldivinylether; 1,4-Cyclohexandimethyloldivinylether; Diethylenglycoldivinylether; Triethylenglycoldivinylether; n-Butylvinylether; tert-Butylvinylether; Cyclohexylvinylether; Dodecylvinylether; Octadecylvinylether; Trimethylolpropandiallylether; Allylpentaerythritol; Trimethylolpropanmonoallylether; und Kombinationen davon.

4. Kationisches gehärtetes Harzsystem nach Anspruch 2, wobei das Epoxidharz aus der Gruppe ausgewählt ist, die aus Folgenden besteht: 3,4-Epoxycyclohexylmethyl-3,4-epoxycyclohexancarboxylat; Bis-(3,4-epoxycyclohexyl)adipat; 3-Ethyl-3-hydroxymethyloxetan; 1,4-Butandioldiglycidylether; 1,6-Hexandioldiglycidylether; Ethylenglycoldiglycidylether; Polypropylenglycoldiglycidylether; Polyglycoldiglycidylether; propoxyliertem Glycerintriglycidylether; Monoglycidylester von Neodecansäure; epoxidiertem Soja; epoxidiertem Leinöl; epoxidierten Polybutadienharzen; und Kombinationen davon.

5. Kationisches gehärtetes Harzsystem nach Anspruch 1, wobei das mindestens eine Harz aus der Gruppe ausgewählt ist, die aus Folgenden besteht: 1,4-Butandioldivinylether; 1,3-Propandioldivinylether; 1,6-Hexandioldivinylether; 1,4-Cyclohexandimethyloldivinylether; Diethylenglycoldivinylether; Triethylenglycoldivinylether; n-Butylvinylether; tert-Butylvinylether; Cyclohexylvinylether; Dodecylvinylether; Octadecylvinylether; Trimethylolpropandiallylether; Allylpentaerythritol; Trimethylolpropanmonoallylether; 3,4-Epoxycyclohexylmethyl-3,4-epoxycyclohexancarboxylat; Bis-(3,4-epoxycyclohexyl)adipat; 3-Ethyl-3-hydroxymethyloxetan; 1,4-Butandioldiglycidylether; 1,6-Hexanedioldiglycidylether; Ethylenglycoldiglycidylether; Polypropylenglycoldiglycidylether; Polyglycoldiglycidylether; propoxyliertem Glycerintriglycidylether; Monoglycidylester von Neodecansäure; epoxidiertem Soja; epoxidiertem Leinöl; epoxidierten Polybutadienharzen; und Kombinationen davon.

6. Kationisches gehärtetes Harzsystem nach Anspruch 1, wobei das mindestens eine Polyol aus der Gruppe ausgewählt ist, die aus Folgenden besteht: Diethylenglycol; Neopentylglycol; Glycerol; Trimethylolpropan; Polyetherpolyolen; Polyesterpolyolen; aliphatischen Polyesterpolyolen, die von Disäuren oder Diolen abstammen; aromatischen Polyesterpolyolen, die von Disäuren oder Diolen abstammen; 1,3-Propandiol; 1,4-Butandiol; 1,6-Hexandiol; 1,4-Cyclohexandimethylol; Derivaten davon; und Kombinationen davon, und optional das mindestens eine Polyol aus der Gruppe ausgewählt ist, die aus Folgenden besteht:
A. einem Polyetherpolyol, das aus der Gruppe ausgewählt ist, die aus Polytetramethylenetherglycol besteht;
B. einem Polyesterpolyol, das aus der Gruppe ausgewählt ist, die aus Caprolactondiol, Caprolactontriol und Kombinationen davon besteht; und
C. Kombinationen davon.

7. Kationisches gehärtetes Harzsystem nach Anspruch 1-6, wobei das Photoinitiationssystem Folgendes umfasst: A. mindestens einen Photoinitiator und B. optional mindestens einen Photosensibilisator, und wobei der mindestens eine Photoinitiator ein kationischer Photoinitiator ist, der aus der Gruppe ausgewählt ist, die aus Iodoniumsalzen, Sulfoniumsalzen und Kombinationen davon besteht.

8. Kationisches gehärtetes Harzsystem nach Anspruch 7, wobei der kationische Photoinitiator aus der Gruppe ausgewählt ist, die aus Folgenden besteht:
A. einem Iodoniumsalz, das aus der Gruppe ausgewählt ist, die aus Bis-(4-methylphenyl)hexafluorphosphat-(1)-iodonium besteht;
B. einem Sulfoniumsalz, das aus der Gruppe ausgewählt ist, die aus Triarylsulfoniumhexafluorantimonat-Salzen, Triarylsulfoniumhexafluorphosphat-Salzen und Kombinationen davon besteht; und
C. Kombinationen davon.

9. Kationisches gehärtetes Harzsystem nach Anspruch 7, wobei der mindestens eine Photosensibilisator aus der Gruppe ausgewählt ist, die aus Isopropylthioxanthon, 1-Chlor-4-propoxythioxanthon, 2,4-Diethylthioxanthon, 2-Chlorthioxanthon und Kombinationen davon besteht.

10. Kationisches gehärtetes Harzsystem nach Anspruch 1-9, wobei das Diamantmaterial aus der Gruppe ausgewählt ist, die aus Diamantpartikeln, Diamantstaub, Diamantbruchstücken, Diamantfragmenten, ganzen Diamanten und Kombinationen davon besteht.

11. Kationisches gehärtetes Harzsystem nach Anspruch 1-10, wobei das Diamantmaterial ein Nanopartikel ist, der einen durchschnittlichen Durchmesser von Folgenden aufweist: von etwa 0,1 nm bis etwa 1 000 nm; bevorzugt von etwa 0,2 nm bis etwa 900 nm; bevorzugter von etwa 0,5 nm bis etwa 800 nm; noch bevorzugter von etwa 1 nm bis etwa 600 nm; sogar noch bevorzugter von etwa 2 nm bis etwa 500 nm; und am bevorzugtesten von etwa 10 nm bis etwa 500 nm, von etwa 20 nm bis etwa 500 nm, von etwa 20 nm bis etwa 200 nm, von etwa 25 nm bis etwa 250 nm, von etwa 35 nm bis etwa 175 nm, von etwa 50 nm bis etwa 150 nm, von etwa 75 nm bis etwa 125 nm oder von etwa 20 nm bis etwa 40 nm; wobei der durchschnittliche Durchmesser gemäß dem Verfahren in der Beschreibung bestimmt wird.

12. Kationisches gehärtetes Harzsystem nach Anspruch 1-10, wobei das Diamantmaterial ein Mikropartikel ist, der einen durchschnittlichen Durchmesser von Folgenden aufweist: von etwa 0,01 µm bis etwa 100 µm; bevorzugt von etwa 0,1 µm bis etwa 75 µm; bevorzugter von etwa 0,5 µm bis etwa 100 µm, von etwa 0,5 µm bis etwa 50 µm oder von etwa 6 µm bis etwa 30 µm; noch bevorzugter von etwa 0,75 µm bis etwa 25 µm; sogar noch bevorzugter von etwa 1 µm bis etwa 10 µm; und am bevorzugtesten von etwa 1 µm bis etwa 5 µm, von etwa 5 µm bis etwa 10 µm, von etwa 2,5 µm bis etwa 7,5 µm oder von etwa 6 µm bis etwa 10 µm; wobei der durchschnittliche Durchmesser gemäß dem Verfahren in der Beschreibung bestimmt wird.

13. Kationisches gehärtetes Harzsystem nach Anspruch 1-12, wobei das Nicht-Diamantmaterial bevorzugt aus der Gruppe ausgewählt ist, die aus Aluminumoxid, Feldspat, einem Spinell, Topas, Quarz und Kombinationen davon besteht, und (iii) Kombinationen davon, wobei:
A. das mindestens eine abriebfeste Material, das Diamantmaterial umfasst, ein Nanopartikel ist, der einen durchschnittlichen Durchmesser von Folgenden aufweist: von etwa 0,1 nm bis etwa 1 000 nm; bevorzugt von etwa 0,2 nm bis etwa 900 nm; bevorzugter von etwa 0,5 nm bis etwa 800 nm; noch bevorzugter von etwa 1 nm bis etwa 600 nm; sogar noch bevorzugter von etwa 2 nm bis etwa 500 nm; und am bevorzugtesten von etwa 10 nm bis etwa 500 nm, von etwa 20 nm bis etwa 500 nm, von etwa 20 nm bis etwa 200 nm, von etwa 25 nm bis etwa 250 nm, von etwa 35 nm bis etwa 175 nm, von etwa 50 nm bis etwa 150 nm, von etwa 75 nm bis etwa 125 nm oder von etwa 20 nm bis etwa 40 nm; und
das zweite abriebfeste Material ein Mikropartikel ist, der einen durchschnittlichen Durchmesser von Folgenden aufweist: von etwa 0,01 µm bis etwa 100 µm; bevorzugt von etwa 0,1 µm bis etwa 75 µm; bevorzugter von etwa 0,5 µm bis etwa 100 µm, von etwa 0,5 µm bis etwa 50 µm oder von etwa 6 µm bis etwa 30 µm; noch bevorzugter von etwa 0,75 µm bis etwa 25 µm; sogar noch bevorzugter von etwa 1 µm bis etwa 10 µm; und am bevorzugtesten von etwa 1 µm bis etwa 5 µm, von etwa 5 µm bis etwa 10 µm, von etwa 2,5 µm bis etwa 7,5 µm oder von etwa 6 µm bis etwa 10 µm; oder
B. das mindestens eine abriebfeste Material, das Diamantmaterial umfasst, ein Mikropartikel ist, der einen durchschnittlichen Durchmesser von Folgenden aufweist: von etwa 0,01 µm bis etwa 100 µm; bevorzugt von etwa 0,1 µm bis etwa 75 µm; bevorzugter von etwa 0,5 µm bis etwa 100 µm, von etwa 0,5 µm bis etwa 50 µm oder von etwa 6 µm bis etwa 30 µm; noch bevorzugter von etwa 0,75 µm bis etwa 25 µm; sogar noch bevorzugter von etwa 1 µm bis etwa 10 µm; und am bevorzugtesten von etwa 1 µm bis etwa 5 µm, von etwa 5 µm bis etwa 10 µm, von etwa 2,5 µm bis etwa 7,5 µm oder von etwa 6 µm bis etwa 10 µm; und
das zweite abriebfeste Material ein Nanopartikel ist, der einen durchschnittlichen Durchmesser von Folgenden aufweist: von etwa 0,1 nm bis etwa 1 000 nm; bevorzugt von etwa 0,2 nm bis etwa 900 nm; bevorzugter von etwa 0,5 nm bis etwa 800 nm; noch bevorzugter von etwa 1 nm bis etwa 600 nm; sogar noch bevorzugter von etwa 2 nm bis etwa 500 nm; und am bevorzugtesten von etwa 10 nm bis etwa 500 nm, von etwa 20 nm bis etwa 500 nm, von etwa 20 nm bis etwa 200 nm, von etwa 25 nm bis etwa 250 nm, von etwa 35 nm bis etwa 175 nm, von etwa 50 nm bis etwa 150 nm, von etwa 75 nm bis etwa 125 nm oder von etwa 20 nm bis etwa 40 nm; oder
optional wobei das kationische gehärtete Harzsystem weiter mindestens ein drittes abriebfestes Material umfasst, das aus der Gruppe ausgewählt ist, die aus Folgenden besteht: (i) einem dritten Diamantmaterial, (ii) einem zweiten Nicht-Diamantmaterial, das bevorzugt einen Mohs-Härtewert von mindestens 6 aufweist und noch bevorzugter aus der Gruppe ausgewählt ist, die aus Aluminumoxid, Feldspat, einem Spinell, Topas, Quarz und Kombinationen davon besteht, wobei das dritte abriebfeste Material einen durchschnittlichen Durchmesser in dem Bereich des mindestens einen abriebfesten Materials und/oder des zweiten abriebfesten Materials aufweist; wobei der durchschnittliche Durchmesser gemäß dem Verfahren in der Beschreibung bestimmt wird.

14. Kationisches gehärtetes Harzsystem nach Anspruch 13, wherein:
A. das mindestens eine abriebfeste Material, das Diamantmaterial umfasst, ein Nanopartikel ist, der einen durchschnittlichen Durchmesser von etwa 2,0 nm bis etwa 500 nm aufweist, und das zweite abriebfeste Material ein Mikropartikel ist, der einen durchschnittlichen Durchmesser von etwa 0,5 µm bis etwa 100 µm aufweist; oder
B. das mindestens eine abriebfeste Material, das Diamantmaterial umfasst, ein Mikropartikel ist, der einen durchschnittlichen Durchmesser von etwa 0,5 µm bis etwa 100 µm aufweist, und das zweite abriebfeste Material ein Nanopartikel ist, der einen durchschnittlichen Durchmesser von etwa 2,0 nm bis etwa 500 nm aufweist;
optional wobei das dritte abriebfeste Material einen durchschnittlichen Durchmesser in dem Bereich des mindestens einen abriebfesten Materials und/oder des zweiten abriebfesten Materials aufweist; wobei der durchschnittliche Durchmesser gemäß dem Verfahren in der Beschreibung bestimmt wird.

15. Kationisches gehärtetes Harzsystem nach Anspruch 13, wobei:
A. das mindestens eine abriebfeste Material, das Diamantmaterial umfasst, ein Nanopartikel ist, der einen durchschnittlichen Durchmesser von etwa 20 nm bis etwa 200 nm aufweist, und das zweite abriebfeste Material ein Mikropartikel ist, der einen durchschnittlichen Durchmesser von etwa 6 µm bis etwa 30 µm aufweist; oder
B. das mindestens eine abriebfeste Material, das Diamantmaterial umfasst, ein Mikropartikel ist, der einen durchschnittlichen Durchmesser von etwa 6 µm bis etwa 30 µm aufweist, und das zweite abriebfeste Material ein Nanopartikel ist, der einen durchschnittlichen Durchmesser von etwa 20 nm bis etwa 200 nm aufweist;
optional wobei das dritte abriebfeste Material einen durchschnittlichen Durchmesser in dem Bereich des mindestens einen abriebfesten Materials und/oder des zweiten abriebfesten Materials aufweist; wobei der durchschnittliche Durchmesser gemäß dem Verfahren in der Beschreibung bestimmt wird.

## Revendications

1. Système de résine durcie cationique, comprenant :
A. au moins une résine ;
B. au moins un polyol ;
C. un système de photo-initiation ;
D. au moins un matériau résistant à l'abrasion comprenant un matériau de diamant et au moins un deuxième matériau résistant à l'abrasion comprenant au moins un matériau choisi dans le groupe constitué par (i) un deuxième matériau de diamant, (ii) un matériau autre que le diamant ayant une valeur de dureté Mohs d'au moins 6,
dans lequel le au moins un matériau résistant à l'abrasion comprenant un matériau de diamant est une nanoparticule et le deuxième matériau résistant à l'abrasion est une microparticule ou vice versa ; et éventuellement
E. au moins un agent de dispersion.

2. Système de résine durcie cationique selon la revendication 1, dans lequel la au moins une résine est choisie dans le groupe constitué par les résines d'éther vinylique, les résines époxy et des combinaisons de celles-ci.

3. Système de résine durcie cationique selon la revendication 2, dans lequel la résine d'éther vinylique est choisie dans le groupe constitué par l'éther divinylique de 1,4-butanediol ; l'éther divinylique de 1,3-propanediol ; l'éther divinylique de 1,6-hexanediol ; l'éther divinylique de 1,4-cyclohexanediméthylol ; l'éther divinylique de diéthylène glycol ; l'éther divinylique de triéthylène glycol ; l'éther n-butyl vinylique ; l'éther tertio-butyl vinylique ; l'éther cyclohexyl vinylique ; l'éther dodécyl vinylique ; l'éther octadécyl vinylique ; l'éther diallylique de triméthylolpropane ; le pentaérythritol d'allyle ; l'éther monoallylique de triméthylolpropane ; et des combinaisons de ceux-ci.

4. Système de résine durcie cationique selon la revendication 2, dans lequel la résine époxy est choisie dans le groupe constitué par le carboxylate de 3,4-époxycyclohexylméthyl-3,4-époxycyclohexane ; l'adipate de bis-(3,4-époxycyclohexyl) ; le 3-éthyl-3-hydroxyméthyloxétane ; l'éther diglycidylique de 1,4-butanediol ; l'éther diglycidylique de 1,6-hexanediol ; l'éther diglycidylique d'éthylène glycol ; l'éther diglycidylique de polypropylène glycol ; l'éther diglycidylique de polyglycol ; l'éther triglycidylique de glycérol propoxylé ; l'ester monoglycidylique d'acide néodécanoïque ; le soja époxydé ; l'huile de lin époxydée ; les résines de polybutadiène époxydées ; et des combinaisons de ceux-ci.

5. Système de résine durcie cationique selon la revendication 1, dans lequel la au moins une résine est choisie dans le groupe constitué par l'éther divinylique de 1,4-butanediol ; l'éther divinylique de 1,3-propanediol ; l'éther divinylique de 1,6-hexanediol ; l'éther divinylique de 1,4-cyclohexanediméthylol ; l'éther divinylique de diéthylène glycol ; l'éther divinylique de triéthylène glycol ; l'éther n-butyl vinylique ; l'éther tertio-butyl vinylique ; l'éther cyclohexyl vinylique ; l'éther dodécyl vinylique ; l'éther octadécyl vinylique ; l'éther diallylique de triméthylolpropane ; le pentaérythritol d'allyle ; l'éther monoallylique de triméthylolpropane ; le carboxylate de 3,4-époxycyclohexylméthyl-3,4-époxycyclohexane ; l'adipate de bis-(3,4-époxycyclohexyle) ; le 3-éthyl-3-hydroxyméthyloxétane ; l'éther diglycidylique de 1,4-butanediol ; l'éther diglycidylique de 1,6-hexanediol ; l'éther diglycidylique d'éthylène glycol ; l'éther diglycidylique de polypropylène glycol ; l'éther diglycidylique de polyglycol ; l'éther triglycidylique de glycérol propoxylé ; l'ester monoglycidylique d'acide néodécanoïque ; le soja époxydé ; l'huile de lin époxydée ; les résines de polybutadiène époxydées ; et des combinaisons de ceux-ci.

6. Système de résine durcie cationique selon la revendication 1, dans lequel le au moins un polyol est choisi dans le groupe constitué par le diéthylène glycol ; le néopentyl glycol ; le glycérol ; le triméthylolpropane ; les polyéther polyols ; les polyester polyols ; les polyester polyols aliphatiques dérivés de diacides ou de diols ; les polyester polyols aromatiques dérivés de diacides ou de diols ; le 1,3-propanediol ; le 1,4-butanediol ; le 1,6-hexanediol ; le 1,4-cyclohexanediméthylol ; des dérivés de ceux-ci ; et des combinaisons de ceux-ci, et éventuellement, le au moins un polyol est choisi dans le groupe constitué par :
A. un polyéther polyol choisi dans le groupe constitué par le polytétraméthylène éther glycol ;
B. un polyester polyol choisi dans le groupe constitué par le caprolactone diol ; le caprolactone triol ; et des combinaisons de ceux-ci ; et
C. des combinaisons de ceux-ci.

7. Système de résine durcie cationique selon les revendications 1-6, dans lequel le système de photo-initiation comprend :
A. au moins un photo-initiateur ; et
B. éventuellement, au moins un photosensibilisateur et
où le au moins un photo-initiateur est un photo-initiateur cationique, choisi dans le groupe constitué par les sels d'iodonium ; les sels de sulfonium ; et des combinaisons de ceux-ci.

8. Système de résine durcie cationique selon la revendication 7, dans lequel le photo-initiateur cationique est choisi dans le groupe constitué par :
A. un sel d'iodonium choisi dans le groupe constitué par l'hexafluorophosphate de bis(4-méthylphényl)iodonium (1) ;
B. un sel de sulfonium choisi dans le groupe constitué par les sels d'hexafluoroantimoniate de triarylsulfonium ; les sels d'hexafluorophosphate de triarylsulfonium ; et des combinaisons de ceux-ci ; et
C. des combinaisons de ceux-ci.

9. Système de résine durcie cationique selon la revendication 7, dans lequel le au moins un photosensibilisateur est choisi dans le groupe constitué par l'isopropylthioxanthone ; la 1-chloro-4-propoxythioxanthone ; la 2,4-diéthylthioxanthone ; la 2-chlorothioxanthone ; et des combinaisons de celles-ci.

10. Système de résine durcie cationique selon les revendications 1-9, dans lequel le matériau de diamant est choisi dans le groupe constitué par les particules de diamant, la poussière de diamant, les éclats de diamant, les fragments de diamant, les diamants entiers, et des combinaisons de ceux-ci.

11. Système de résine durcie cationique selon les revendications 1-10, dans lequel le matériau de diamant est une nanoparticule ayant un diamètre moyen allant d'environ 0,1 nm à environ 1000 nm ; préférablement d'environ 0,2 nm à environ 900 nm ; plus préférablement d'environ 0,5 nm à environ 800 nm ; encore plus préférablement d'environ 1 nm à environ 600 nm ; toujours plus préférablement encore d'environ 2 nm à environ 500 nm ; et tout préférablement d'environ 10 nm à environ 500 nm, d'environ 20 nm à environ 500 nm, d'environ 20 nm à environ 200 nm, d'environ 25 nm à environ 250 nm, d'environ 35 nm à environ 175 nm, d'environ 50 nm à environ 150 nm, d'environ 75 nm à environ 125 nm ou d'environ 20 nm à environ 40 nm ; dans lequel le diamètre moyen est déterminé selon la méthode de la description.

12. Système de résine durcie cationique selon les revendications 1-10, dans lequel le matériau de diamant est une microparticule ayant un diamètre moyen allant d'environ 0,01 µm à environ 100 µm ; préférablement d'environ 0,1 µm à environ 75 µm ; plus préférablement d'environ 0,5 µm à environ 100 µm, d'environ 0,5 µm à environ 50 µm, ou d'environ 6 µm à environ 30 µm ; encore plus préférablement d'environ 0,75 µm à environ 25 µm ; toujours plus préférablement encore d'environ 1 µm à environ 10 µm ; et tout préférablement d'environ 1 µm à environ 5 µm, d'environ 5 µm à environ 10 µm, d'environ 2,5 µm à environ 7,5 µm, ou d'environ 6 µm à environ 10 µm ; dans lequel le diamètre moyen est déterminé selon la méthode de la description.

13. Système de résine durcie cationique selon les revendications 1-12, dans lequel le matériau autre que le diamant est préférablement choisi dans le groupe constitué par l'oxyde d'aluminium, le feldspath, un spinelle, la topaze, le quartz et des combinaisons de ceux-ci, et (iii) des combinaisons de ceux-ci, où :
A. le au moins un matériau résistant à l'abrasion comprenant un matériau de diamant est une nanoparticule ayant un diamètre moyen allant d'environ 0,1 nm à environ 1000 nm ; préférablement d'environ 0,2 nm à environ 900 nm ; plus préférablement d'environ 0,5 nm à environ 800 nm ; encore plus préférablement d'environ 1 nm à environ 600 nm ; toujours plus préférablement encore d'environ 2 nm à environ 500 nm ; et tout préférablement d'environ 10 nm à environ 500 nm, d'environ 20 nm à environ 500 nm, d'environ 20 nm à environ 200 nm, d'environ 25 nm à environ 250 nm, d'environ 35 nm à environ 175 nm, d'environ 50 nm à environ 150 nm, d'environ 75 nm à environ 125 nm ou d'environ 20 nm à environ 40 nm ; et
le deuxième matériau résistant à l'abrasion est une microparticule ayant un diamètre moyen allant d'environ 0,01 µm à environ 100 µm ; préférablement d'environ 0,1 µm à environ 75 µm ; plus préférablement d'environ 0,5 µm à environ 100 µm, d'environ 0,5 µm à environ 50 µm, ou d'environ 6 µm à environ 30 µm ; encore plus préférablement d'environ 0,75 µm à environ 25 µm ; toujours plus préférablement encore d'environ 1 µm à environ 10 µm ; et tout préférablement d'environ 1 µm à environ 5 µm, d'environ 5 µm à environ 10 µm, d'environ 2,5 µm à environ 7,5 µm, ou d'environ 6 µm à environ 10 µm ; ou
B. le au moins un matériau résistant à l'abrasion comprenant un matériau de diamant est une microparticule ayant un diamètre moyen allant d'environ 0,01 µm à environ 100 µm ; préférablement d'environ 0,1 µm à environ 75 µm ; plus préférablement d'environ 0,5 µm à environ 100 µm, d'environ 0,5 µm à environ 50 µm, ou d'environ 6 µm à environ 30 µm ; encore plus préférablement d'environ 0,75 µm à environ 25 µm ; toujours plus préférablement encore d'environ 1 µm à environ 10 µm ; et tout préférablement d'environ 1 µm à environ 5 µm, d'environ 5 µm à environ 10 µm, d'environ 2,5 µm à environ 7,5 µm, ou d'environ 6 µm à environ 10 µm ; et
le deuxième matériau résistant à l'abrasion est une nanoparticule ayant un diamètre moyen allant d'environ 0,1 nm à environ 1000 nm ; préférablement d'environ 0,2 nm à environ 900 nm ; plus préférablement d'environ 0,5 nm à environ 800 nm ; encore plus préférablement d'environ 1 nm à environ 600 nm ; toujours plus préférablement encore d'environ 2 nm à environ 500 nm ; et tout préférablement d'environ 10 nm à environ 500 nm, d'environ 20 nm à environ 500 nm, d'environ 20 nm à environ 200 nm, d'environ 25 nm à environ 250 nm, d'environ 35 nm à environ 175 nm, d'environ 50 nm à environ 150 nm, d'environ 75 nm à environ 125 nm ou d'environ 20 nm à environ 40 nm ; ou
le système de résine durcie cationique comprenant éventuellement en outre au moins un troisième matériau résistant à l'abrasion choisi dans le groupe constitué par (i) un troisième matériau de diamant, (ii) un deuxième matériau autre que le diamant ayant préférablement une valeur de dureté Mohs d'au moins 6 et encore plus préférablement choisi dans le groupe constitué par l'oxyde d'aluminium, le feldspath, un spinelle, la topaze, le quartz et des combinaisons de ceux-ci, où le troisième matériau résistant à l'abrasion présente un diamètre moyen dans la plage du au moins un matériau résistant à l'abrasion et/ou du deuxième matériau résistant à l'abrasion ; où le diamètre moyen est déterminé selon la méthode de la description.

14. Système de résine durcie cationique selon la revendication 13, dans lequel :
A. le au moins un matériau résistant à l'abrasion comprenant un matériau de diamant est une nanoparticule ayant un diamètre moyen allant d'environ 2,0 nm à environ 500 nm, et le deuxième matériau résistant à l'abrasion est une microparticule ayant un diamètre moyen allant d'environ 0,5 µm à environ 100 µm ; ou
B. le au moins un matériau résistant à l'abrasion comprenant un matériau de diamant est une microparticule ayant un diamètre moyen allant d'environ 0,5 µm à environ 100 µm, et le deuxième matériau résistant à l'abrasion est une nanoparticule ayant un diamètre moyen allant d'environ 2,0 nm à environ 500 nm ;
éventuellement, où le troisième matériau résistant à l'abrasion présente un diamètre moyen dans la plage du au moins un matériau résistant à l'abrasion et/ou du deuxième matériau résistant à l'abrasion ; où le diamètre moyen est déterminé selon la méthode de la description.

15. Système de résine durcie cationique selon la revendication 13, dans lequel :
A. le au moins un matériau résistant à l'abrasion comprenant un matériau de diamant est une nanoparticule ayant un diamètre moyen allant d'environ 20 nm à environ 200 nm et le deuxième matériau résistant à l'abrasion est une microparticule ayant un diamètre moyen allant d'environ 6 µm à environ 30 µm ; ou
B. le au moins un matériau résistant à l'abrasion comprenant un matériau de diamant est une microparticule ayant un diamètre moyen allant d'environ 6 µm à environ 30 µm, et le deuxième matériau résistant à l'abrasion est une nanoparticule ayant un diamètre moyen allant d'environ 20 nm à environ 200 nm ;
éventuellement, où le troisième matériau résistant à l'abrasion présente un diamètre moyen dans la plage du au moins un matériau résistant à l'abrasion et/ou du deuxième matériau résistant à l'abrasion ; où le diamètre moyen est déterminé selon la méthode de la description.
